# EUROPEAN PATENT SPECIFICATION

(11) **EP 2 202 826 B1**
(45) Date of publication and mention of the grant of the patent: **05.06.2013**
(21) Application number: 09179045.1
(22) Date of filing: 14.12.2009
(51) Int. Cl.: H01G 9/022, H01M 4/60

(54) **Polymer Electrolytes and Devices containing them**
Polymerelektrolyte und Vorrichtungen damit
Électrolytes de polymère et dispositifs les contenant

(30) Priority: 23.12.2008 AU 2008906611
(43) Date of publication of application: 30.06.2010
(73) Proprietor: SMR Patents S.à.r.l., 1653 Luxembourg (LU)
(72) Inventor: Wallace, Gordon G., Gwynneville, New South Wales 2500 (AU); Innis, Peter C, Mangerton, New South Wales 2500 (AU); Desai, Satyen, Wollongong, New South Wales 2500 (AU); Shepherd, Roderick, Birchgrove, New South Wales 2041 (AU); Fabretto, Manrico, Warradale, South Australia 5046 (AU); Edwards, Scott, Kent Town, South Australia 5067 (AU)
(74) Representative: Jones Day

(56) References cited:
- WO-A1-2006/039795
- US-A1- 2005 231 785
- US-A1- 2006 210 876

## Description

### FIELD OF THE INVENTION

The present invention relates generally to polymer electrolytes. More particularly, the present invention relates to improved polymer electrolyte compositions and their use in electrochemical devices, such as electrochromic devices.

### BACKGROUND OF THE INVENTION

Electrochemical devices that convert chemical energy into electrical energy, or vice versa, are widely used. Examples include batteries, electrolytic cells, electrochromic devices, etc. Typically, electrochemical devices contain two electrodes immersed in an electrolyte so that electrode reactions can occur at the electrode-electrolyte surfaces.

Solutions of acids, bases or salts are commonly used as electrolytes in electrochemical devices. However, liquid electrolytes of this type tend to be volatile and this affects the long term use of electrochemical devices containing them. Alternatively, or in addition, there are safety concerns associated with the use of such liquid electrolytes due to the possibility of leakage.

Ionic liquids ("ILs") are an alternative to the more traditional acid-, base- or salt-based liquid electrolytes. ILs consist of large organic cations and large, usually inorganic, anions. ILs are inherently ionically conductive, are inflammable, have high thermal stability, and are relatively inexpensive to manufacture. ILs that are liquids at room temperature have been used as electrolytes in electrochemical devices. For example, United States Patent 6,828,062 discloses the use of certain room temperature ILs in conjugated polymer based electrochromic devices.

However, the highly reactive nature of the Lewis acids that are used to form room temperature ILs limits the kinds of organic and inorganic compounds that can be used in conjunction with ILs. Trace halide elements typically present in ILs can be detrimental to the long term performance and stability of electrochromic devices containing them.

Additionally, low viscosity room temperature liquid ILs may also suffer from cell leakage issues.

Electrochemical devices using polymer electrolytes were developed to overcome some of the problems associated with the use of liquid electrolytes. Solid polymer electrolytes ("SPEs") comprising polyalkylene oxide based polymer electrolytes are well studied. SPEs are formable, capable of being easily formed into a large area film, flexible, and have excellent adhesivity to electrodes. Past research efforts have been directed toward improving the conductivity of SPEs by adding low-molecular-weight polyalkylene oxides or organic solvents as a plasticiser. For example, it has been shown that the ionic conductivity of an SPE based on a lithium salt dissolved in a polyethylene oxide ("PEO") host can be improved by inclusion of a plasticiser and a lithium ion coordinating compound in the SPE. However, the physical properties of the SPEs tend to be effected by the presence of the plasticiser. Bircan et al. (Bircan et al., Journal of Physics: Conference Series 127 (208) 012011) discloses the use of an IL as a plasticiser in a poly(ethylene glycol) monoacrylate based SPE. The ILs were used in place of a typical salt and are stated to serve the purpose of both a plasticiser and salt.

Despite advances to date in the development of liquid electrolytes and SPEs, there is a need for improved and/or alternative electrolytes for electrochemical devices and, in particular, electrochromic devices.

Reference to any prior art in this specification is not, and should not be taken as, an acknowledgment or any form of suggestion that this prior art forms part of the common general knowledge in any country.

### SUMMARY OF THE INVENTION

The present invention arises from studies into the use of ILs as plasticisers in SPEs. More specifically, the present invention arises from studies that have shown that electrochemical cells containing SPEs including: (i) a non-volatile organic ionic salt; and (ii) an inorganic electrolyte salt have an improved conductivity across a range of temperatures, and are more stable to water compared to electrochemical cells containing SPEs including either an IL or an inorganic electrolyte salt. These studies have shown that, surprisingly, when non-volatile organic ionic salts are included in SPEs at up to 25% w/w along with an inorganic electrolyte salt, the non-volatile organic ionic salt is not solely involved in the charge transfer processes taking place. Rather, enhancement of the bulk of the ionic conductivity arises due to the presence of the inorganic electrolyte salt.

The present invention provides a polymer electrolyte suitable for use in an electrochemical cell according to claim 1, the polymer electrolyte including:
- a polymer substrate;
- an organic ionic salt plasticiser; and
- an inorganic electrolyte salt that is compatible with the organic ionic salt.

The organic ionic salt may be a room temperature IL or it may be a semi-solid or solid at room temperature. ILs are typically defined as being liquid when at room temperature. Semi-solid or solid organic ionic salts are closely related to ILs but present themselves as waxy solids at room temperature. Typically, the semi-solid or solid organic ionic salts have lower ionic conductivity than their liquid analogues but also possess negligible volatility. This being the case, these materials fall outside the commonly defined IL classification for these materials.

The polymer substrate may be selected from the group consisting of: a polyalkylene, a polyether, a polyester, a polyamine, a polyimide, a polyurethane, a polysulfide, a polyphosphazene, a polysiloxane, a polyalkylene oxide, a polyvinylidene fluoride, a polyhexafluoropropylene, a polyacrylonitrile, a polymethyl methacrylate, a derivative of any one or more of the aforementioned, a copolymer of any one or more of the aforementioned, and a crosslinked product of any one or more of the aforementioned.

In some embodiments, the polymer substrate is a polyalkylene oxide or copolymer thereof. The polyalkylene oxide may be selected from the group consisting of polyethylene oxide, polypropyleneoxide, and copolymers thereof. Each of these polymers is a product resulting from the polymerisation of ethylene oxide monomers and/or propylene oxide monomers.

In some embodiments, the polyalkylene oxide is polyethylene oxide, such as polyethylene oxide having a molecular weight of 2,000 Da, 10,000 Da, or 20,000 Da. The inorganic electrolyte salt is selected so that it is compatible with the organic ionic salt. Our studies suggest that the inorganic electrolyte salt is predominantly responsible for the conductivity of the polymer electrolyte.

In some embodiments, the inorganic electrolyte salt is a lithium salt. Suitable lithium salts include LiBF₄, LiPF₆, LiClO₄, LiAsF₆, LiCF₃SO₃, LiN(CF₃SO₂)₂, LiN(C₂F₅SO₂)₂, LiC(CF₃SO₂)₃, LiCl, LiF, LiBr, and Lil. In some embodiments, the lithium salt is LiN(CF₃SO₂)₂, also known as LiTFSI. For use in electrochromic devices, LiTFSI is compatible with the electrochromic layer.

The molar ratio of the polymer substrate and the inorganic electrolyte salt may be about 8:1.

The organic ionic salt is non-volatile at room temperature and acts as a plasticiser for the polymer substrate. The organic ionic salt may be an ionic liquid or an organic ionic salt or wax. The choice of ionic liquid or organic ionic salt will be dictated by the desired viscosity and operational temperature ranges of the resultant SPE. In some embodiments, an organic ionic salt that is semi-solid or solid at room temperature is preferred. Organic ionic salts that are waxy at room temperature include *N,N*-dimethyl-pyrrolidinium bis(trifluoromethanesulfonyl) imide (P₁₁TFSI), *N*-ethyl-*N*-methyl-pyrrolidinium bis(trifluoromethanesulfonyl) imide (P₁₂TFSI), diethyl (isobutyl) ethyl phosphonium tosylate and triethyl (methyl) phosphonium tosylate. Organic ionic salts that are liquid at room temperature include *N*-butyl-*N*-methyl-pyrrolidinium bis(trifluoromethanesulfonyl) imide (P₁₄TFSI). The amount of organic ionic salts added to a composition containing the polymer substrate and the inorganic electrolyte salt may be between about 25% w/w and about 75% w/w, such as 25% w/w, 50% w/w or 75% w/w.

The present invention also provides an electrochemical cell including:
- a working electrode;
- a counter electrode;
- a polymer electrolyte as described herein in contact with both the working electrode and the counter electrode; and
- means for electrically connecting the working electrode and the counter electrode.

The electrochemical cell may also include a power supply for applying a voltage between the working electrode and the counter electrode.

In some embodiments, the working electrode is a conjugated polymer electrode. In some embodiments, the counter electrode is a conjugated polymer electrode. In some embodiments, the working electrode and the counter electrode are conjugated polymer electrodes.

The present invention also provides an electrochromic device, the device including:
- a first electrochromic substrate;
- a second electrochromic substrate spaced from the first electrochromic substrate, at least one of the first and second electrochromic substrates being transparent; and
- a substantially transparent polymer electrolyte as described herein in contact with the first and second electrochromic substrates.

The present invention also provides an electrochromic device, the device including:
- a first substantially transparent electrochromic substrate;
- a second electrochromic substrate spaced from the first electrochromic substrate, the second electrochromic substrate including a substrate, a reflective layer and an electrochromic film over the reflective layer ; and
- a substantially transparent polymer electrolyte as described herein in contact with the first and second electrochromic substrates.

The present invention also provides an electrochemical device including an electrochemical cell as described herein.

Electrochemical devices in which the polymer electrolyte can be used include, but are not limited to: electrochromic devices such as electrochromic mirrors, electrochromic windows, batteries, capacitors, etc. In an embodiment the electrochemical device is a vehicle mirror. In another embodiment the electrochemical device is a window.

### BRIEF DESCRIPTION OF THE FIGURES

The present invention will now be described in relation to various embodiments of which some aspects are illustrated in the accompanying figures. In the figures:
- Figure 1: is a schematic cross sectional view of an electrochromic window device according to an embodiment of the present invention.
- Figure 2: is a plot of temperature (°C) vs conductivity (S/cm) showing the temperature dependence of the conductivity of the electrolytes investigated.
- Figure 3: (a) is a plot of the DSC of ionic liquid and polymer electrolytes; and (b) is a plot of the DSC showing IL behaviour in (PEO)₈LiTFSI + P₁₄TFSI.
- Figure 4: is a plot of the shear rate (1/s) vs log (viscosity) (Pa) showing the viscosity of the ionic liquids and different electrolytes.
- Figure 5: is a plot showing the UV-vis performance for a polypyrrole-polyethylenedioxythiophene electrochromic device utilizing P₁₄TFSI electrolyte switched for 10,000 cycles at ±1.5 V. Inset: UV-vis transmission changes at 560 nm during device cycling.
- Figure 6: is a plot showing the UV-vis performance for a polypyrrole-polyethylenedioxythiophene electrochromic device utilizing a (PEO)₈LiTFSI + 25 % P₁₄TFSI solid polymer electrolyte switched for 10,000 cycles at ±1.5 V. Inset: Transmission response changes during device cycling at 560 nm.
- Figure 7: is a plot of temperature (°C) vs conductivity (S/cm) for the PEO A samples.
- Figure 8: is a plot of temperature (°C) vs conductivity (S/cm) for the PEO B samples.
- Figure 9: is a plot of temperature (°C) vs conductivity (S/cm) for the PEO E samples.
- Figure 10: is a plot of temperature (°C) vs conductivity (S/cm) for the PEO X samples.
- Figure 11: is a plot of temperature (°C) vs conductivity (S/cm) for the PEO Y samples.
- Figure 12: is a plot of temperature (°C) vs conductivity (S/cm) for the PEO Z samples.
- Figure 13: is a plot of the DSC for the PEO A samples.
- Figure 14: is a plot of the DSC for the PEO B samples.
- Figure 15: is a plot of the DSC for the PEO E samples.
- Figure 16: is a plot of the DSC for the PEO X samples.
- Figure 17: is a plot of the DSC for the PEO Y samples.
- Figure 18: is a plot of the DSC for the PEO Z samples.
- Figure 19: is a plot of the DSC for the organic ionic salt plasticiser.
- Figure 20: is a plot of the DSC for PEO.
- Figure 21: is a plot showing the maximum amount of organic ionic salt plasticizer.
- Figure 22: is a plot of the shear rate (1/s) vs log (viscosity) (Pa) for the PEO A samples.
- Figure 23: is a plot of the shear rate (1/s) vs log (viscosity) (Pa) for the PEO B samples.
- Figure 24: is a plot of the shear rate (1/s) vs log (viscosity) (Pa) for the PEO E samples.
- Figure 25: shows the spectral data for the PEO E1 sample.
- Figure 26: shows the spectral data for the PEO E2 sample.
- Figure 27: shows the spectral data for the PEO E3 sample.
- Figure 28: shows the spectral data for the PEO E4 sample.
- Figure 29: shows the spectral data for the PEO E5 sample.
- Figure 30: shows the spectral data for the PEO E6 sample.
- Figure 31: shows the spectral data for the PEO E7 sample.
- Figure 32: shows the spectral data for the PEO Y1 sample.
- Figure 33: shows the spectral data for the PEO Y2 sample.
- Figure 34: shows the spectral data for the PEO Y3 sample.
- Figure 35: shows the spectral data for the PEO Y4 sample.
- Figure 36: shows the spectral data for the PEO Y5 sample.
- Figure 37: shows the spectral data for the PEO Y6 sample.
- Figure 38: shows the spectral data for the PEO Y7 sample.
- Figure 39: shows the spectral data for the organic ionic salt plasticizer.
- Figure 40: is a plot showing the influence of PEO molecular weight and plasticizer type and content upon ionic conductivity.
- Figure 41: is a plot showing the conductivity temperature dependence of the SPE at different PEO molecular weights.

### DETAILED DESCRIPTION OF THE INVENTION

SPEs, which are also known as ion-conducting polymers, typically consist of an ionic compound dissolved in a solid polymer substrate material.

The polymer electrolytes described herein include a polymer substrate, an inorganic electrolyte salt, and a plasticiser. The plasticiser is an organic ionic salt.

The polymer substrate may be selected from the group consisting of: a polyalkylene, a polyether, a polyester, a polyamine, a polyimide, a polyurethane, a polysulfide, a polyphosphazene, a polysiloxane, a polyalkylene oxide, a polyvinylidene fluoride, a polyhexafluoropropylene, a polyacrylonitrile, a polymethyl methacrylate, a derivative of any one or more of the aforementioned, a copolymer of any one or more of the aforementioned, and a crosslinked product of any one or more of the aforementioned.

The polymer substrate may be selected from the group consisting of: polyethylene oxide; polyethylene glycol; polypropylene oxide; polypropylene glycol; block polyethylene glycol-polypropylene glycol-polyethylene glycol; polyethylene glycol-polypropylene glycol-polyethylene glycol; polyvinylidene fluoride; polyvinyl chloride; polyvinyl butyral; polymethylmethacrylate; polyacrylonitrile; polyether imide; polyvinyl acetate; polyvinlylpropylene; polydimethylsiloxane-co-ethylene oxide; and polyorganophosphazene.

In some embodiments, the polymer substrate is a polyalkylene oxide or copolymer thereof. The polyalkylene oxide may be selected from the group consisting of polyethylene oxide, polypropyleneoxide, and copolymers thereof. Each of these polymers is a product resulting from the polymerisation of ethylene oxide monomers and/or propylene oxide monomers.

In some specific embodiments, the polymeric compound is polyethylene oxide ("PEO" and also known as polyethylene glycol, "PEG"). Polyethylene oxide can be prepared by polymerisation of ethylene oxide using polymerisation conditions that are known in the art. It is also commercially available over a wide range of molecular weights from 300 Da to 10,000,000 Da. In some embodiments, the molecular weight of the polyethylene oxide is between about 2000 Da and about 20,000 Da (inclusive). Specific molecular weight polyethylene polymers that could be used include 2,000 Da, 10,000 Da, or 20,000 Da polymers.

The molecular weight of the polymer substrate will determine, at least in part, the viscosity of the polymer electrolyte. The polymer electrolyte may be a liquid, a gel, or a waxy solid. Higher molecular weight polymer substrates that lead to the formation of gel or waxy solid polymer electrolytes may be preferred in some applications because they minimise problems associated with the use of liquid electrolytes, such as leakage from electrochemical cells containing them.

Advantageously, we have also found that the use of hygroscopic polymer substrates results in the electrochemical cells that are relatively stable in the presence of water. This suggests that the polymer used in the polymer electrolyte may play a role in mediating active water content. Typically, excessive water is detrimental to the lifetime of electrochemical cells containing SPEs. However, our results to date have shown that the polymer electrolytes of the present invention can contain water and still be used in electrochemical cells having commercially acceptable lifetimes. Therefore (and with reference to the following Table 1A), the present invention may enable one to control active water content of the polymer electrolyte, thereby providing a compatible environment for conducting polymer electrochromics.

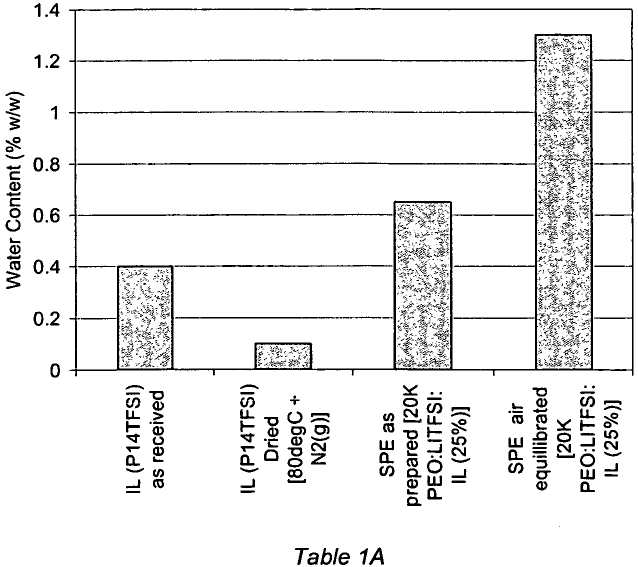

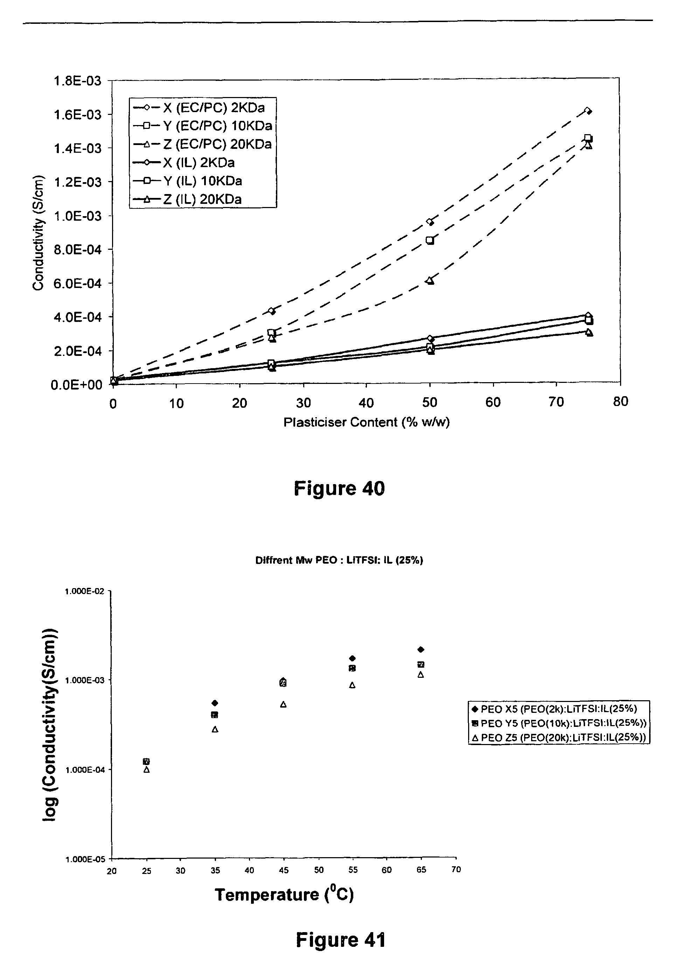

The influence of PEO molecular weight and plasticiser type and content upon the ionic conductivity at room temperature is shown in Figure 40. Both the IL and EC/PC plasticised electrolytes demonstrate an increase in ionic conductivity with an increasing level of plasticisation. The ionic conductivity of these electrolytes decreased only slightly with increasing PEO molecular weight. Significantly, the EC/PC plasticised SPEs achieved conductivity an order of magnitude higher at the high levels of plasticisation due to improving solvation effects. However, at the preferred 25% w/w plasticisation level the observed conductivities were of the same order with the IL plasticised systems only marginally lower such that no significant change in functionality is observable in a functioning electrochromic device.

The conductivity temperature dependence of the IL plasticised SPE at different PEO molecular weights is shown in Figure 41. From room temperature to 65°C the conductivity of the SPE increases by an order of magnitude fro 10⁻⁴ to 10⁻³ S/cm. The molecular weight of the PEO polymer in the SPE had only a minor influence on the final conductivity, irrespective of temperature, with the conductivity increasing with increasing molecular weight from the 2K to 20K Da.

The inorganic electrolyte salt may be a metallic salt. In some embodiments, the inorganic electrolyte salt is selected from one or more of the group consisting of: lithium salts, potassium salts, and sodium salts. An inorganic electrolyte salt that is chemically compatible with the organic ionic salt is advantageous. Therefore, the choice of inorganic electrolyte salt may depend, at least in part, on the nature of the organic ionic salt that is used.

In some embodiments, the inorganic electrolyte salt is a lithium salt. The lithium salt may be selected from any one or more of the group consisting of: LiBF₄, LiPF₆, LiClO₄, LiAsF₆, LiCF₃SO₃, LiN(CF₃SO₂)₂, LiN (C₂F₅SO₂)₂, LiC(CF₃SO₂)₃, LiCl, LiF, LiBr, and Lil.

In some specific embodiments, the electrolytic salt is LiN(CF₃SO₂)₂ (i.e. lithium trifluoromethanesulphonylimide or "LiTFSI"). LiTFSI is compatible with various PTFSI organic ionic salts and, therefore, may be particularly useful in conjunction with those salts (as desribed in more detail below).

The molar ratio of the polymer substrate and the inorganic electrolyte salt may be about 8:1. As will be appreciated, the molar ratio of the polymer substrate and the inorganic electrolyte salt affects the conductivity of the polymer electrolyte and, therefore, the actual molar ratio used may be determined based on the desired conductivity. In some embodiments, the molar ratio of the polymer substrate and the inorganic electrolyte salt is above about 8:1. In some embodiments, the molar ratio of the polymer substrate and the inorganic electrolyte salt is about 10:1. We have found that when the ratio is too far above 10:1 (for example about 12:1) the resultant polymer electrolyte tends to be opaque (i.e. no longer amorphous) due to crystallisation. These materials tend not to be suitable for use in electrochromic devices.

Furthermore, we have found that the inorganic electrolyte salt is required to form a transparent polymer electrolyte. We have found that in the absence of the inorganic electrolyte salt a transparent polymer electrolyte cannot be formed, even when 25% organic ionic salt is used.

A complex of the polymer substrate and the inorganic electrolyte salt can be prepared by mixing the polymer and the salt. The polymer and the salt may be mixed directly or by mixing solutions of each component in a suitable solvent (e.g. methanol, acetonitrile, etc) and then removing the solvent under vacuum at a suitable temperature to provide a polymer-salt composition. Alternatively, a solution of the polymer and the salt may be treated with the organic ionic salt plasticiser as described below.

The organic ionic salt plasticiser can then be mixed with the polymer-salt composition in an appropriate amount. The amount of organic ionic salt plasticiser added to the polymer-salt composition may be between about 25% w/w and about 75% w/w. In some embodiments, the amount of organic ionic salt plasticiser added to the polymer-salt composition is 25% w/w. In some embodiments, the amount of organic ionic salt plasticiser added to the polymer-salt composition is 50% w/w. In some embodiments, the amount of organic ionic salt plasticiser added to the polymer-salt composition is 75% w/w. In some embodiments, the amount of organic ionic salt plasticiser added to the polymer-salt composition is less than about 50% w/w.

In contrast to some polymer electrolytes containing an ionic liquid described in the prior art, our studies suggest that in the polymer electrolyte of the present invention the organic ionic salt is intimately associated with the polymer substrate. Pure ILs such as P₁₄TFSI have a reported conductivity of 2 x 10⁻³ S/cm while these composites, depending upon inorganic salt concentrations, vary from 10⁻⁴ to 10⁻³ S/cm. Using differential scanning calorimetry we have found that up to 800% w/w of the organic ionic salt can be added to the polymer substrate before the organic ionic salt behaves as an unbound organic ionic salt. These findings suggest that the bound IL or organic ionic salt may only play a relatively minor role in the final conductivity of the polymer electrolyte.

The control and modulation of the conductivity of the polymer electrolyte of the present invention can therefore be attributed to the inorganic ionic salt. Indeed, increasing the amount of inorganic ionic salt present in the polymer electrolyte results in a commensurate increase in the conductivity, thereby indicating that the inorganic ionic salt is responsible largely for the conductivity.

We therefore propose that the organic ionic salt is largely acting as a plasticiser for the polymer substrate.

The organic ionic salt may be an ionic liquid. As used herein, the term "ionic liquid" means a liquid that contains essentially only ions and whose melting point is below about 100°C. Salts that are liquid at room temperature (known as room temperature ionic liquids, or RTILs) can be used. The ionic liquid may include an organic cation, such as imidazolium ion or pyridinium ion, with an anion such as BF₄⁻ and CF₃SO₃⁻ However, many ionic liquids may be too volatile for use in electrochemical cells. Therefore, in some embodiments, an organic ionic salt that is semi-solid or solid at room temperature is preferred. Organic ionic salts that are waxy at room temperature include *N*,*N*-dimethyl-pyrrolidinium bis(trifluoromethanesulfonyl) imide (P₁₁TFSI), *N*-ethyl-*N*-methyl-pyrrolidinium bis(trifluoromethanesulfonyl) imide (P₁₂TFSI), diethyl (isobutyl) ethyl phosphonium tosylate and triethyl (methyl) phosphonium tosylate. Organic ionic salts that are liquid at room temperature include *N*-butyl-*N-*methyl-pyrrolidinium bis(trifluoromethanesulfonyl) imide (P₁₄TFSI). The amount of organic ionic salts added to a composition containing the polymer substrate and the inorganic electrolyte salt may be between about 25% w/w and about 75% w/w, such as 25% w/w, 50% w/w or 75% w/w.

Advantageously, the gel like nature of the polymer electrolyte of the present invention allows it to be used in flexible electrochemical devices because the gel does not bubble when the device is bent. Furthermore, the relatively high viscosity of the polymer electrolyte prevents delamination when torsional forces are applied to flexible devices containing the polymer electrolyte.

In order to improve the mechanical strength and/or the performance of the polymer electrolyte at the interface with electrodes, additives, such as an adhesion enhancer, a filler, a UV stabilizer, a UV absorber, or the like may be included in the polymer electrolyte.

The polymer electrolytes formed can be characterized by conductivity, impedance spectroscopy and/or differential scanning calorimetry. The viscosity and the modulus of the polymer electrolytes can also be measured.

In some embodiments, the polymer electrolytes are optically transparent. As a result, the polymer electrolytes in these embodiments are suitable for use in conjunction with transparent electrodes in optical electrochemical devices, such as electrochromic mirrors and windows (as discussed in more detail below).

The polymer electrolyte can be used in electrochemical cells which can, in turn, be used in electrochemical devices such as electrochromic mirrors, smart windows, display devices, batteries, capacitors etc. The electrochemical cell includes: a working electrode; a counter electrode; a polymer electrolyte as described herein in contact with both the working electrode and the counter electrode; and means for electrically connecting the working electrode and the counter electrode. The cell may also include a power supply for applying a voltage between the working electrode and the counter electrode.

In some embodiments, the working electrode is a conjugated polymer electrode. In some embodiments, the counter electrode is a conjugated polymer electrode. In some embodiments, the working electrode and the counter electrode are conjugated polymer electrodes.

As an example, the use of the polymer electrolyte in an electrochromic device will now be described. However, it will be understood by the skilled person that the polymer electrolyte is suitable for use in, and can readily be incorporated into, a range of electrochemical devices.

As is known in the art, an electrochromic device is one in which a reversible redox reaction takes place upon application of an electric voltage, resulting in repeating coloration and bleaching as a result of the redox reaction occurring between electrochromic compounds contained in the device.

Two electrically conductive substrates are used in an electrochromic device - a working electrode and a counter electrode. The electrically conductive substrates may be made from an electrically conductive material or by laminating an electrically conductive layer over one or both surfaces of a non-electrically conductive substrate. The substrates may be flat, curved or deformable.

In an electrochromic device the counter electrode may be transparent and the working electrode may be transparent, opaque or a reflective substrate. Generally, a device having transparent counter and working electrodes is suitable for displays and smart windows, while a device having a transparent counter electrode and an opaque working electrode is suitable for displays. A device having a transparent counter electrode and a reflective working electrode is suitable for electrochromic mirrors.

To form electrochromic devices any electrochromic compounds may be used such as anodic electrochromic compounds, cathodic electrochromic compounds, and compounds having both anodic electrochromic and cathodic electrochromic structures.

Examples of the anodic electrochromic compounds are pyrazoline-based compound derivatives, metallocene compound derivatives, phenylenediamine compound derivatives, benzidine compound derivatives, phenazine compound derivatives, phenoxadine compound derivatives, phenothiazine compound derivatives, and tetrathiafulvalene derivatives.

Examples of the cathodic electrochromic compound are styryl compound derivatives, viologen compound derivatives, and anthraquinone-based compound derivatives.

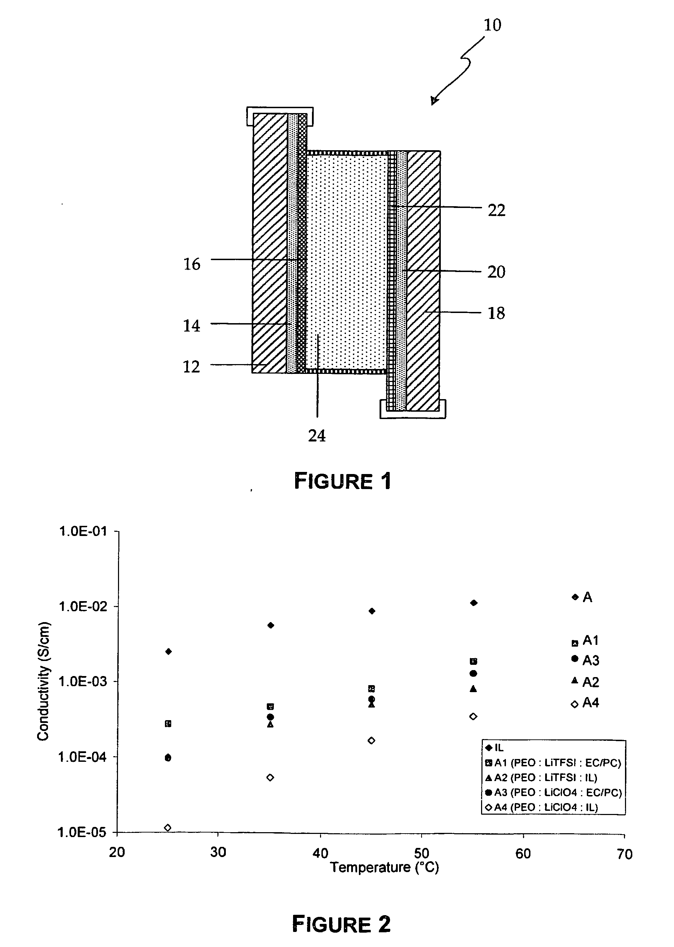

Specific details of an electrochromic device are shown in Figure 1 and will now be described in more detail. Further details of electrochromic devices may also be found in international patent application PCT/AU2009/000125 titled "Processes for producing electrochromic substrates and electrochromic articles made therefrom".

The electrochromic device 10 shown in Figure 1 is suitable for use as an electrochromic window. The device includes a first electrochromic substrate including a transparent substrate 12. The transparent substrate 12 may be coloured or colourless glass, tempered glass, coloured or colourless transparent plastics, etc. Examples of suitable plastics include polyethylene terephtalate, polyethylene naphthalate, polyamide, polysulfone, polyether sulfone, polyether etherketone, polyphenylene sulfide, polycarbonate, polyimide, polymethyl methacrylate, and polystyrene.

The transparent substrate 12 is laminated with a transparent layer of inorganic conductive material 14 so as to form a transparent electrode. The layer of inorganic conductive material may be a metal thin film of gold, silver, chrome, copper, and tungsten or an electrically conductive thin film of metal oxides. Specific examples of suitable metal oxides are ITO (In₂O₃-SnO₂), tin oxide, silver oxide, zinc oxide, and vanadium oxide. The thickness of the layer of inorganic conductive material is usually within the range of 10 to 500 nm, such as 50 to 300 nm. Any suitable method of forming a layer of inorganic conductive material may be employed depending on the type of metals and/or metal oxides forming the electrode. For example, the layer of inorganic conductive material may be formed by vacuum evaporation, ion-plating, sputtering, and sol-gel methods.

An electroactive conjugated polymer film 16 is coated over the layer of inorganic conductive material. The conjugated polymer may be a polyaryl or polyheteroaryl polymer. The electroactive polymer film 16 is cathodically coloring and forms the cathodic working electrode of the device 10.

The electroactive conjugated polymer may be selected from the group consisting of:
- polyaryl polymers, such as polyphenylene, polyphenylenesulfide, polyaniline, polyquinone, polyfluorene, polyanthraquinone, poly-1,4-phenylene vinylene (PPV), and 2-methoxy-5-ethylhexyloxy poly-1,4- phenylene vinylene (MEH-PPV);
- polyheteroaryl polymers, such as polythiophene (PTh), polypyrrole (PPy), polyfuran (Pfu), polycarbazole (PCz), poly-3,4-ethylenedioxythiophene (PEDOT), poly(3,4-propylenedioxythiophene (ProDOT), poly-3,4-(2,2-dimethylpropylene)dioxythiophene (ProDOT-Me₂)_{,} poly-3,4-ethylenedioxypyrrole (PEDOP), poly-3,4-propylenedioxypyrrole (ProDOP), poly-N-(3-sulfonatopropoxy)-3,4-propylenedioxypyrrole (PProDOP-NPS), poly-1,2-bis(2-ethylenedioxythienyl)vinylene (PBEDOT-V), poly-1,2-bis(2-propylenedioxythienyl)vinylene (PProDOT-V), poly-2,5-bis(2-ethylenedioxythienyl)pyridine (PBEDOT-Pyr), poly-1,4-bis(2-ethylendioxythienyl)-2,5- didodecyloxybenzene (PBEDOT-B(OC₁₂H₂₅)₂), poly-3-methylthiophene (P3MTh), poly-2,5-(2-ethylenedioxythienyl)furan (PBEDOT-Fu), poly-4,4'-(2-ethylenedioxythienyl)biphenyl (PBEDOT-BP), poly-3,6-(2-ethylenedioxythienyl)carbazole (PBEDOT-Cz), poly-3-butylthiophene (P3BTh), alkyl poly-3,4-ethylenedioxythiophene (PEDOT-alkyl), aryl poly-3,4-ethylenedioxythiophene (PEDOT-aryl), poly-2,5-(2-thienyl) pyrrole (PSNS), polyviologen (PV), poly-metal phthalocyanines (PM Phth), poly-5,5'-biethylenedioxythiophene (PBiEDOT), poly-1,2-(2-ethylene dioxythienyl) cyanovinylene (PBEDOT-CNV), poly-1,2-(2-thienyl)cyanovinylene (PBTh-CNV), poly[2,5-bis(2ethylenedioxythienyl)- diphenylpyridopyrazine] (PBEDOT-PyrPyr(Ph)₂), polythiopehenvinylene, polythiazole, poly(p-pyridine), poly(p-pyridalvinylene), and polyindole;
- and deriviatives of any of the aforementioned.

A second electrochromic substrate includes a transparent substrate 18, typically a glass or plastic substrate (as previously described), and a transparent layer of inorganic conductive material 20, such as a layer of indium-tin oxide (ITO) to form a conductive substrate. An electroactive conjugated polymer film 22 is coated over the layer of inorganic conductive material 20. The electroactive polymer film 22 is prepared using any suitable method, including solution coating, vapour phase polymerisation, or electrochemical coating. The electroactive polymer film is anodically coloring and formed from polypyrrole, polyaniline or a derivative thereof, such as polymethoxyaniline-5- sulfonic Acid (PMAS). It is also contemplated that other electrochromic polymers or metal oxides be used to form the electroactive polymer film. The electroactive polymer film 22 forms the anodic counter electrode of the device.

The polyaryl or polyheteroaryl electroactive polymer film 16 and the electroactive polymer film 22 are selected to have a combined absorption spectrum which is maximum across the photopic spectrum when an electric potential is applied between the films. When a reverse electric potential is applied between the films they have a combined absorption spectrum which is minimum across the photopic spectrum. As each of the electrochromic polymer films is substantially transparent, the colour change is visible to the user.

The polymer electrolyte 24 is interposed between the polyaryl or polyheteroaryl electroactive polymer film 16 and the electroactive polymer film 22. The polymer electrolyte 24 is sandwiched between the polyaryl or polyheteroaryl electroactive polymer film 16 and the electroactive polymer film 22 by forming seals therebetween. The electrochromic substrates 12 and 18 and polymer electrolyte 24 do not have to completely overlap, even though some overlap is needed for electric and/or ionic current to pass between them. Thus, the electrochromic substrates 12 and 18 can be displaced with respect to one another. This allows for electrical contacts and to be connected to each substrate.

In use, the application of a voltage differential between the electrochromic substrates 12 and 18 causes the migration of ions from one electrochromic polymer film, through the polymer electrolyte 24, and into the other electrochromic polymer film, thereby causing each of the electrochromic polymer films to become either bleached or coloured. Thus, when a voltage is applied, the electrochromic substrate containing the electroactive polymer film 22 is polarised positive (anode) and the electrochromic substrate containing the polyaryl or polyheteroaryl electroactive polymer film 16 is polarised negative (cathode), whereupon an electric field is induced in the polymer electrolyte 24. This causes reduction of the polyaryl or polyheteroaryl electroactive polymer film 16 and oxidation of the electroactive polymer film 22. The extent of the colour change is dependent on the voltage applied and the specific materials used.

The polymer electrolyte 24 in the electrochemical device may be any suitable thickness, such as from 1 µm to 3 mm or from 10 µm to 1 mm. The polymer electrolyte may be sandwiched between substrates by injecting a precursor solution (e.g. a monomer or pre-polymer solution) into a space between a pair of electrically conductive substrates, having sealed peripheral edges, by vacuum injection or atmospheric injection or a meniscus method and then curing the solution. Alternatively, the polymer electrolyte may be produced by forming the polymer electrolyte layer over one of the two electrically conductive substrates and then superimposing the other substrate thereover.

Electrochemical cells containing the polymer electrolyte of the present invention may have improved conductivity across a range of temperatures than some other polymer electrolytes.

### DESCRIPTION OF EMBODIMENTS OF THE INVENTION

Specific embodiments of the present invention will now be described in more detail. However, it must be appreciated that the following description is not to limit the generality of the above description.

### Materials

20 kDa polyethylene oxide (PEO) (Aldrich), lithium trifluoromethanesulphonylimide (LiTFSI) (3M), LiClO₄ (Aldrich), ethylene carbonate (EC) (Aldrich), propylene carbonate (PC) (Aldrich), N-butyl-3methylpyridinium trifluoromethanesulphonylimide (P₁₄TFSI) (Merck) and Fe(III) tosylate (Fe(OTS)₃) in butanol (Baytron C™) were used as supplied without further purification. Pyrrole (Merck) and ethylenedioxythiophene (EDOT) (Merck) monomers were vacuum distilled prior to use. Conducting indium tin oxide glass (ITO) electrodes were purchased from Yihdah, and cleaned with detergent/H₂O then isopropanol prior to use.

### Example 1 - Polymer electrolyte preparation

The polymer electrolytes consist of polymer substrate, inorganic electrolyte salt, and organic ionic salt plasticiser.

Polymer electrolytes were prepared by mixing PEO and LiClO₄ or LiTFSI in an 8:1 mole ratio. The polymer-salt mixture was then dissolved in 25 % w/v acetonitrile. To this gel solution, 25 % w/w 3:1 mole ratio EC/PC or P₁₄TFSI plasticiser was added and the electrolyte stirred for 24 hrs. The acetonitrile solvent was then allowed to slowly evaporate at room temperature and then further dried by vacuum for a further 24 hrs. The composition of the various electrolytes produced is given in Table 1. The quantity of plasticiser is expressed in weight percent (wt %) of PEO and salt present.

**Table 1 - Composition of samples prepared**

| **Sample ID** | **Composition** |
|---|---|
| A (IL) | P₁₄TFSI |
| A1 | (PEO)₈LiTFSI + 25 % EC/PC |
| A2 | (PEO)₈LiTFSI + 25 % P₁₄TFSI |
| A3 | (PEO)₈LiClO₄ + 25 % EC/PC |
| A4 | (PEO)₈LiClO₄ + 25 % P₁₄TFSI |

### Example 2 - Polymer synthesis

Conducting polymesr poly(3,4-ethylenedioxythiophene) (PEDOT), and polypyrrole (PPy) were prepared on 5 x 5 cm conducting indium tin oxide (ITO) glass electrodes as follows.

For PEDOT, a 16 %w/v solution of Fe(III) tosylate (Fe(OTs)₃) was prepared by diluting 40 % w/v Baytron CB40™ with butanol and used as an oxidizing agent. 0.5 mol of pyridine per mole of oxidant was used for base-inhibited vapour-phase polymerization. The mixture of pyridine and Fe(OTs)₃ was spin coated on the previously cleaned glass substrate at a speed of 1800 rpm. The oxidant film was allowed to dry on a hot plate at 60 °C for 10 min. The glass substrate was then transferred to a reaction chamber containing the monomer 3,4-ethylenedioxythiophene (EDOT). The vapour phase polymerization of EDOT was carried out at 60 °C for 1 h after which the glass substrate was transferred to a hot plate for 20 min. The films were then thoroughly rinsed with ethanol. Typical PEDOT films produced by this method had surface resistances of 400 ± 20 Ω/cm²_{.}

For PPy, a 60% solution of Fe(III) tosylate (Fe(OTs)₃) in butanol (Baytron C) is used as an oxidizing agent. 2% wt of PEG/PPG/PEG was added to the oxidant to prevent crystallization of Fe(III) tosylate. The mixture was spin coated on cleaned glass substrate at 1800 rpm. The film was allowed to dry on a hotplate at 60 °C for 10 min. The glass substrate was then transferred to a reaction chamber containing the pyrrole monomer. The vapour phase polymerisation reaction was carried out at room temperature for 20 mins and the deposited film thoroughly rinsed with ethanol. Typical PPy films produced by this method had surface resistances of 4240 ± 50 Ω/cm².

### Example 3 - Construction of an electrochromic device

Electrolyte was drop cast onto the PEDOT and PPy coated ITO electrode surfaces. Prior to device assembly the electrolyte was degassed and dried under vacuum (-90 KPa) for 5-6 hrs at 30°C. After drying the two ITO coated electrodes were pressed together using an 80 micron glass cover slip spacer to prevent electrical shorting within the device. Finally the devices were edge sealed with UV cured epoxy glue (see Figure 1).

### Example 4 - Conductivity measurement

Conductivity measurements were carried out in an in-house constructed multi-sample conductance cell, consisting of a block of 306 stainless steel with thermostatically controlled heaters embedded. Into this block 6 sample compartments were machined. The conductance cell was sealed in an airtight container under a nitrogen atmosphere. The conductance path is formed between the wall of the compartment and a central electrode within each sample compartment. The calibration constant of each of the cells was determined by calibration before and after each sample measurement with ca. 1 mL 0.01 M KCl solution at 25 °C. The conductance of the samples was obtained by measurement of the complex admittance of the cell between 20 Hz and 1 MHz using a HP4284A Impedance Meter, and determined from the first real axis touchdown point in the Nyquist plot of the impedance data. The temperature was controlled at a set temperature with a Shimaden digital temperature controller. A type T measurement thermocouple probe was located in the stainless steel block close to the sample compartments.

For all of the electrolyte systems investigated the conductivity increased with temperature over the range 25°C - 65°C, as shown in Figure 2. The polymer electrolytes containing LiTFSI salt additives exhibited a slightly higher ionic conductivity than those containing LiClO₄. The EC/PC plasticised system containing LiTFSI or LiClO₄ salt was found to have a higher conductivity than the ionic liquid P₁₄TFSI plasticised counterpart due to the PC/EC plasticiser being more efficient at dissociating the salt additives. Nevertheless, the conductivity of the (PEO)₈LiTFSI + 25 % P₁₄TFSI formulation was of a similar order with respect to the PC/EC analogues which suffer from plasticiser volatility loss problems. At 25°C the conductivity of the pure IL was determined to be 2.50 x 10⁻³ S/cm, consistent with previously reported values. The optimal polyelectrolyte formulations of (PEO)₈LiTFSI + 25 % PC/EC and(PEO)₁₀LiTFSI + 25 % P₁₄TFSI both had conductivities an order-of-magnitude lower than the pure IL at 2.74 x 10⁻⁴ S/cm and 1.00 x 10⁻⁴ S/cm respectively. Room temperature conductivity of the solid polymer electrolytes without plasticiser was in the range of 10⁻⁵ to 10⁻⁶ S/cm and were opaque therefore providing no utility in ECD fabrication.

### Example 5 - DSC measurement

The thermal properties of the SPE samples were characterized by differential scanning calorimetry (DSC) using a Perkin-Elmer Model 7 DSC. Measurements were made at a scan rate of 10.0 °C/min over the range - 80 °C to 180 °C. All samples were sealed in hermetic DSC pans under a nitrogen atmosphere.

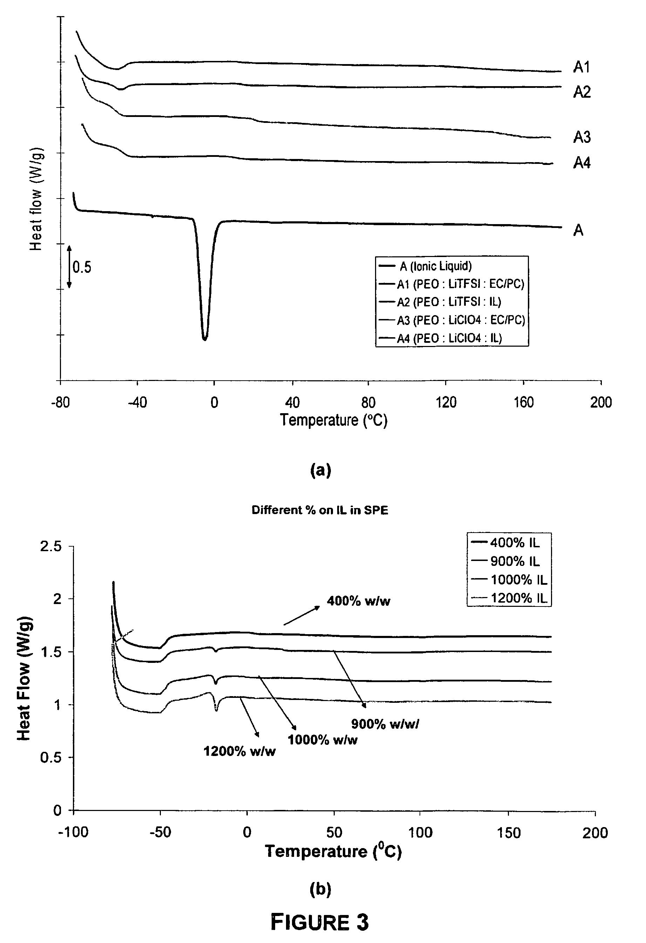

DSC thermograms of each electrolyte system were obtained (Figure 3(a)) and it was found that the electrolytes were amorphous over the range of temperatures studied. For the P₁₄TFSI IL plasticised electrolytes it was also apparent that the IL itself was intimately bound within the electrolyte composition and did not exhibit independent phase behavior. Independent unbound IL phase changes were only observed when the IL loadings exceeded 800 % w/w loadings, confirming the strong association of the IL to the PEO component producing a new composite material (Figure 3(b)).

The PEO-salt EC/PC electrolytes appeared to be very homogeneous and even after prolonged storage no phase separation resulting in the electrolyte becoming opaque was observed. On the other hand a PEO-lonic liquid binary mixture without any added salt has been found to be unstable resulting in phase separation.

### Example 6 - Viscosity

Viscosity of the electrolytes (over the shear rate range 100 S⁻¹ up to 12000 S⁻¹) was determined using a Physica Anton Paar (MCR 300) controlled stress rheometer with parallel plate geometry using 0.1mm of sample was placed between the two parallel shear plates.

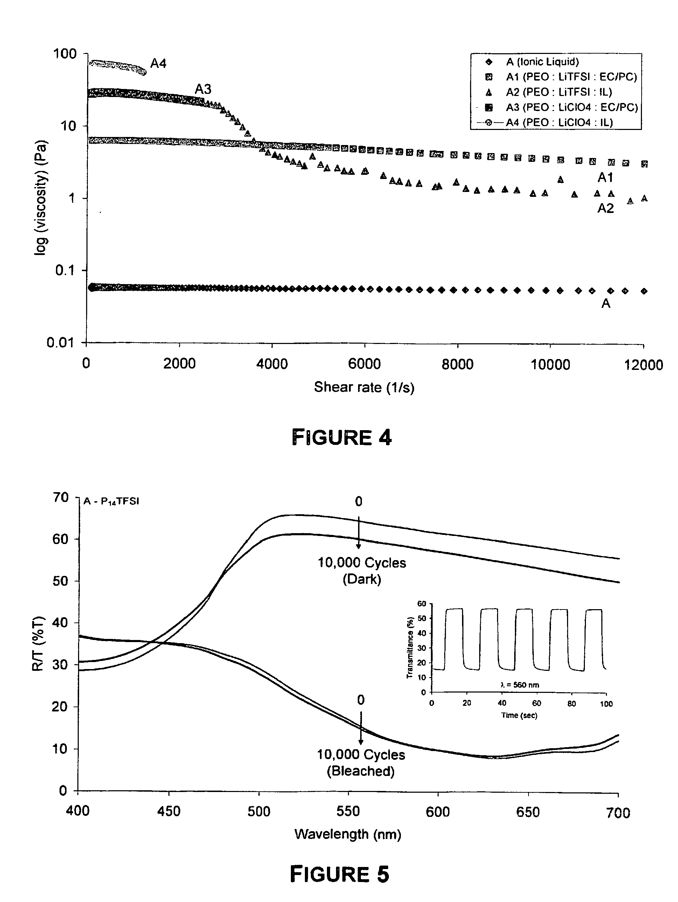

The viscosity of the polymer electrolytes was, as expected, higher than that observed for the neat ionic liquid (Figure 4). The viscosity of all electrolytes was found to decrease with shear rate, indicating that the electrolytes behave as non-Newtonian liquids. The LiClO₄ salt systems had a significantly higher viscosity than the LiTFSI equivalents, which was also reflected in the lower ionic conductivity measured. The viscosity of the polymer electrolytes containing LiClO₄ could not be measured at higher shear rates as the torque required for these measurements was beyond the range of the instrument.

Electrolytes prepared using ionic liquid as a plasticiser had viscosities that were higher than the corresponding EC/PC system. Organic molten salts such as ionic liquids have been reported to be more viscous than traditional organic solvent based electrolytes. The viscosity of the LiTFSI salt complex was found to be lower than the equivalent LiClO₄ salt. Also, as the LiTFSI salt and IL plasticiser contain the same anion they are more compatible and hence lower viscosity is observed for this system. Additionally, the TFSI anions are large and flexible molecules with a high degree of charge delocalization. Structural studies on these anions have shown that the size of the imide ion weakens the host polymer-ion interactions hindering the alignment of these polymer chains thereby resulting in the observed decrease in viscosity.

### Example 7 - Optical Characterisation of ECDs

Characterisation of ECD photopic contrast was carried out using a Hunter lab ColorQuestXE spectrophotometer in the range of 400-700 nm. A UV-1501 photdiode array spectrometer (Shimadzu) was employed to acquire real time UV-vis switching spectra from 400-700nm for each ECD at a 5 Hz sample interval. During transmission and absorption measurements the absorption of the glass and the electrolytes was not subtracted from the background.

All the electrolytes studied in the examples exhibited negligible transmission losses over the 400-700nm visible wavelength range with respect to the ITO glass electrodes, making them highly suitable for study in light transmission electrochromic devices. Test devices were assembled from complimentary anodically and cathodically darkening polypyrrole (PPy) and polyethylendioxythiophene (PEDOT), respectively, that were vapour phase deposited onto ITO glass substrates. A minimum of three test devices were assembled and tested with each electrolyte system discussed above.

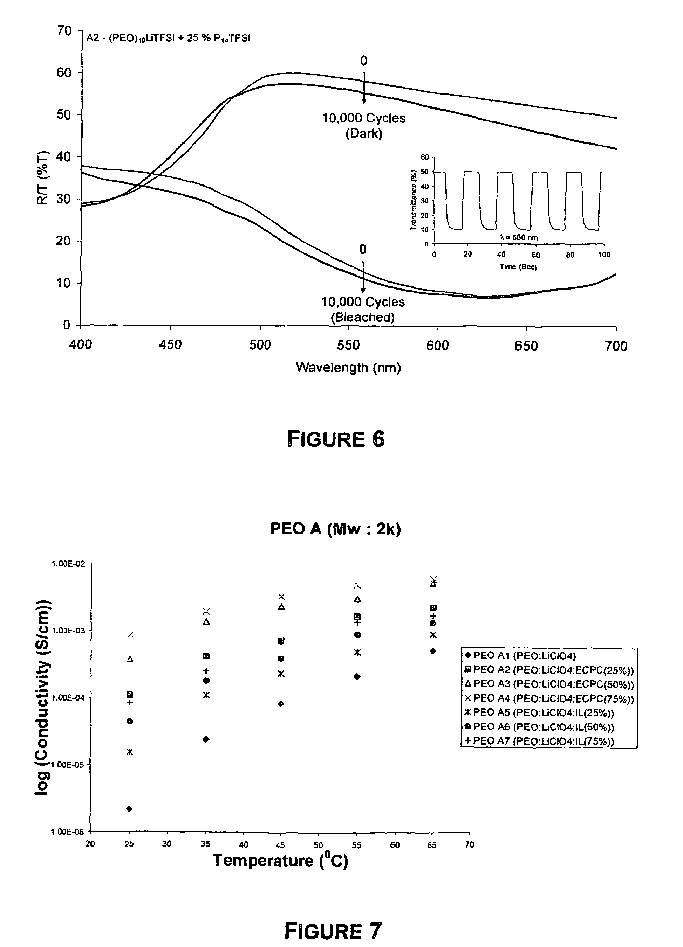

Each ECD was characterized by the application of a ± 1.5 V square wave potential and the device response monitored by UV-vis (photodiode array) spectroscopy in order to probe the switching time and the contrast range (Figures 5 and 6). The transmission change of each ECD was measured at 560 nm for all electrolyte systems over a total of 10,000 cycles and is shown Figures 5 and 6 insets. During cycling the ECD switched from dark blue (dark state) to a transparent yellow (bleached state). The maximum photopic contrast change in the assembled electrochromic cells (dark to bleached state) ranged from 44 to 45 % ΔT for the SPE systems while the IL based ECD cell was marginally better at 47 % ΔT, Table 2. The variation in the initial contrast ranges for the SPE systems was attributed to subtle variations in ECD assembly while the higher IL result was presumably due to the higher ionic conductivity of the electrolyte.

The initial performance of the IL electrolyte was superior to the SPEs developed, however the overall device performance decreased from 47 to 43 % ΔT over the 10,000 test cycles (or 4 % ΔT loss), Table 2. SPEs formulated with EC/PC as a plasticiser (A1 and A3) both exhibited a gradual decrease in device stability with a loss of 8 % ΔT after 10,000 cycles. Significantly, SPEs formulated with the IL as a plasticiser (A2 and A4) demonstrated an initial increase of up to 3 % ΔT in the ECD contrast over the first 2,000 to 5,000 cycles. However, after 10,000 cycles SPEs A2 and A4 had similar device switching ranges as the P₁₄TFSI electrolyte.

**Table 2 - Photopic responses of the ECDs at various cycling intervals.**

| | **Photopic % AT Response** | | | | |
|---|---|---|---|---|---|
| **Samples / Cycles** | **0** | **1,000** | **2,000** | **5,000** | **10,000** |
| **A - P₁₄TFSI** | 47 | 45 | 44 | 43 | 43 |
| **A1 - (PEO)₈LiTFSI + 25 % EC/PC** | 45 | 41 | 40 | 37 | 37 |
| **A2 - (PEO)₈LiTFSI + 25 % P₁₄TFSI** | 44 | 47 | 46 | 46 | 43 |
| **A3 - (PEO)₈LiClO₄ + 25 % EC/PC** | 44 | 41 | 40 | 38 | 36 |
| **A4 - (PEO)₈LiClO₄ + 25 % P₁₄TFSI** | 45 | 44 | 47 | 45 | 43 |

The switching response times for the various electrolytes is shown in the Table 3. The switching times were calculated as the time required to achieve a 90% transmission maximum/minimum upon application of the ± 1.5 V square wave potential over 10 seconds. Switching response was carried out at 560 nm as the human eye is most responsive to this region of wavelength. The electrolyte containing (PEO)₈LiClO₄ + IL (A4) had the longest switching time with respect to the other electrolytes. This slow switching was due to the electrolyte having highest viscosity and lowest conductivity of all the systems investigated. The colour changes observed in these devices was highly dependent upon the diffusion of dopant ions in and out of the conducting polymer electrochromes. Due to the high electrolyte viscosity and higher IR potential drop afforded by this electrolyte the diffusion based doping process associated with the conducting polymers was significantly hindered resulting in slower switching speeds. Even though the observed switching speeds for the IL plasticised SPE were slower than the PE/EC equivalents the additional stability imparted through the use of the IL as a plasticiser resulted in improved ECD stability, Table 2.

**Table 3 - Switching time of ECDs for various electrolyte combinations.**

| **Sample** | **Colored to bleach (sec.)** | **Bleach to colored (sec.)** |
|---|---|---|
| **A - P₁₄TFSI** | 0.7 | 1.9 |
| **A1 - (PEO)₈LiTFSI + 25 % EC/PC** | 1.3 | 2.0 |
| **A2 - (PEO)₈LiTFSI + 25 % P₁₄TFSI** | 1.1 | 4.0 |
| **A3 - (PEO)₈LiClO₄ + 25 % EC/PC** | 1.0 | 1.4 |
| **A4 - (PEO)₈LiClO₄ + 25 % P₁₄TFSI** | 3.8 | 6.5 |

It was also noted that the time taken for the electrochromic devices to switch from the dark to the bleached state was faster than bleached to dark state. During transitions from the bleached to dark state the PEDOT electrochrome switched from the conductive oxidized to insulating neutral state while the PPy electrochrome switched from the insulating neutral to conducting oxidized state. Differences in the electrode kinetic rates between these two complimentary redox processes, coupled with significant differences in the electrical conductivity of these coatings, typically 400 Ω/cm² and 4240 Ω/ cm² for PEDOT and PPy respectively, may account for the observed switching time offsets. The fact that both the conducting polymer electrochromes under go these processes in a coupled fashion makes it difficult to identify the limiting process.

### Example 8 - Comparison of polymer electrolytes

For comparative purposes, two different types of plasticiser were investigated: (a) the organic ionic salt P1,4TFSI; and (b) the known plasticiser ethylene carbonate/propylene carbonate ("EC/PC"). The amount of plasticiser was varied form 25%, 50%, and 75% w/w.

The polymer electrolytes were formed by mixing polyethylene oxide having a molecular weight of either 2,000, 10,000 or 20,000 Da and either LiClO₄ or LiTFSI in a molar ratio (PEO:Li) of about 8:1. To do this, the polymer and salt were dissolved in acetonitrile and the solvent extracted by vacuum to provide a polymer-salt composition. The polymer-salt composition was then mixed with either the organic ionic salt plasticiser or EC/PC (for comparative purposes) in different amounts as outlined below. Polymer electrolytes were then vacuum back filled into pre-assembled ITO glass layers coated with electrochromic coatings, as in Figure 1. Electrochromic layers employed were polypyrrole (anodically colouring) and polyethylenedioxythiophene (cathodically colouring) prepared via vapor phase polymerization in the presence of ferric tosylate oxidant precoated onto the ITO glass.

The following samples were formed using this procedure.
(a) PEO and LiClO₄ compositions mixed with different amounts of plasticser.
   PEO M_{w} 2000 : Sample A
   PEO M_{w} 20,000 : Sample B
   PEO M_{w} 10,000 : Sample E
   Samples
   A1,B1,E1 : PEO/Li in mole ratio 8:1
   A2,B2, E2 : PEO/Li in mole ratio 8:1 + 25% EC/PC
   A3,B3, E3 : PEO/Li in mole ratio 8:1 + 50% EC/PC
   A4,B4, E4 : PEO/Li in mole ratio 8:1 + 75% EC/PC
   A5,B5, E5 : PEO/Li in mole ratio 8:1 + 25% organic ionic salt plasticiser
   A6,B6, E6 : PEO/Li in mole ratio 8:1 + 50% organic ionic salt plasticiser
   A7,B7, E7 : PEO/Li in mole ratio 8:1 + 75% organic ionic salt plasticiser
(b) PEO and LiTFSI compositions mixed with different amounts of plasticiser.
   PEO M_{w} 2000 : Sample X
   PEO M_{w} 20,000 : Sample Y
   PEO M_{w} 10,000 : Sample Z
   Samples
   X1,Y1,Z1 : PEO/Li in mole ratio 8:1
   X2,Y2, Z2 : PEO/Li in mole ratio 8:1 + 25% EC/PC
   X3,Y3, Z3 : PEO/Li in mole ratio 8:1 + 50% EC/PC
   X4,Y4, Z4 : PEO/Li in mole ratio 8:1 + 75% EC/PC
   X5,Y5, Z5 : PEO/Li in mole ratio 8:1 + 25% organic ionic salt plasticiser
   X6,Y6, Z6 : PEO/Li in mole ratio 8:1 + 50% organic ionic salt plasticiser
   X7,Y7,Z7 : PEO/Li in mole ratio 8:1 + 75% organic ionic salt plasticiser

### Example 9 - Characterisation of polymer electrolytes

The electrolytes were characterised by conductivity, impedance spectroscopy, and DSC. The viscosity and modulus of the electrolytes and the cell cycle stability were also measured.

The conductivity of the polymer electrolytes was in the range of 10⁻⁴ to 10⁻³ S/cm. Specifically, the conductivity of the P₁₄TFSI based polymer electrolyte was 2 x 10⁻³ S/cm.

Conductivity is dependent upon the addition of inorganic electrolyte salt and not the organic ionic salt plasticiser.

The PEO:LiTFSI based polymer electrolyte showed better conductivity than the PEO:LiClO₄ based polymer electrolyte.

The conductivity of the polymer electrolytes increased with the increase in temperature and plasticiser content.

The DSC results showed that the polymer electrolytes are amorphous with no crystalline regions present. The loss of crystallinity and plasticisation allows the polymer to acquire fast internal rotational modes and segmental motion. This in turn favours the interchain and intrachain ion movements resulting in conductivity increases.

The viscosity of the polymer electrolytes decreased with increase in plasticiser content. For low molecular weight PEO it was found that the viscosity remains constant with increase in shear rate and the electrolytes behave as Newtonian fluids. For high molecular weight PEO the viscosity decreases with shear rate. Shear thinning was also observed at an increased shear rate.

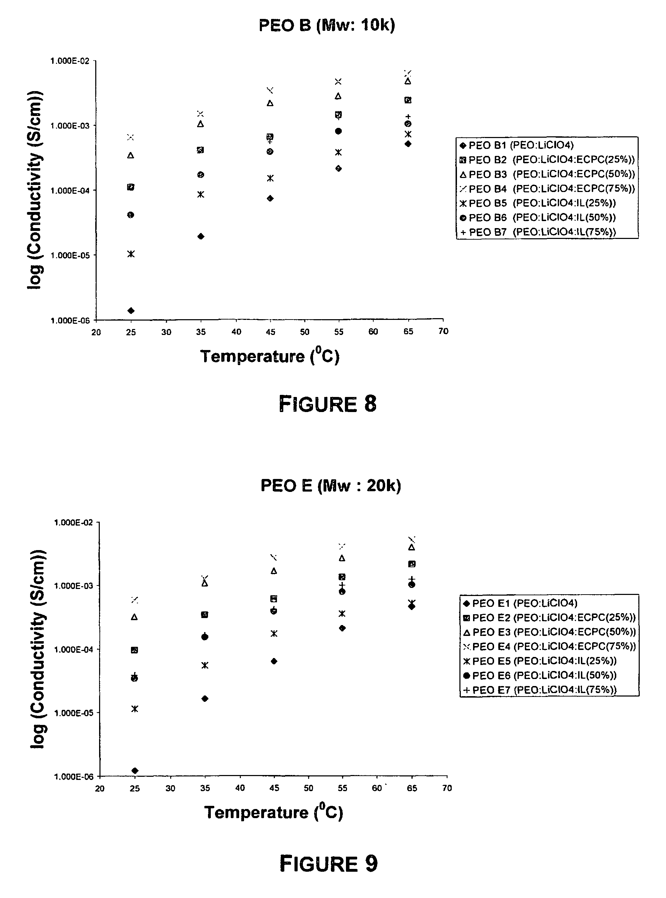

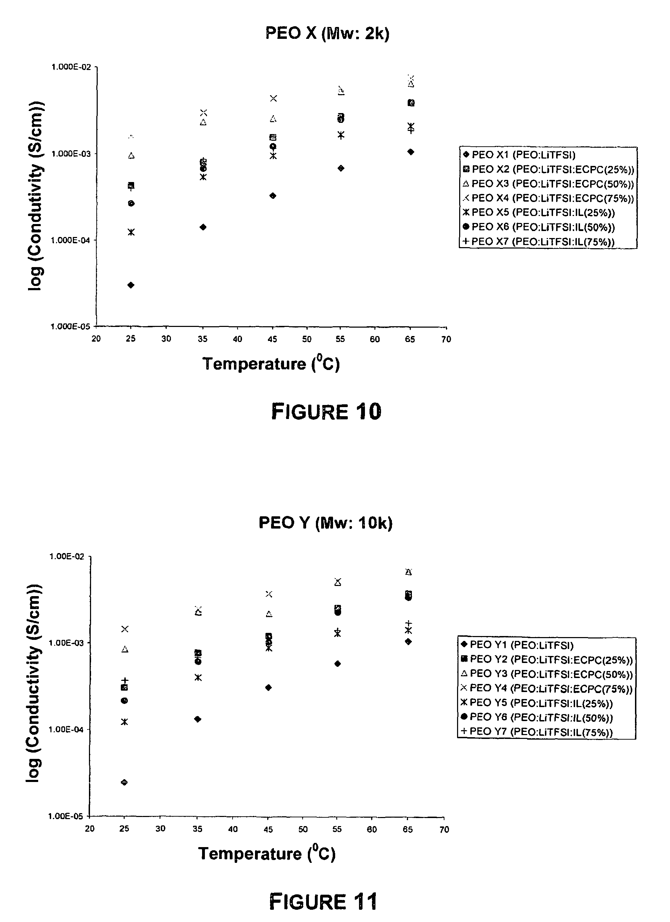

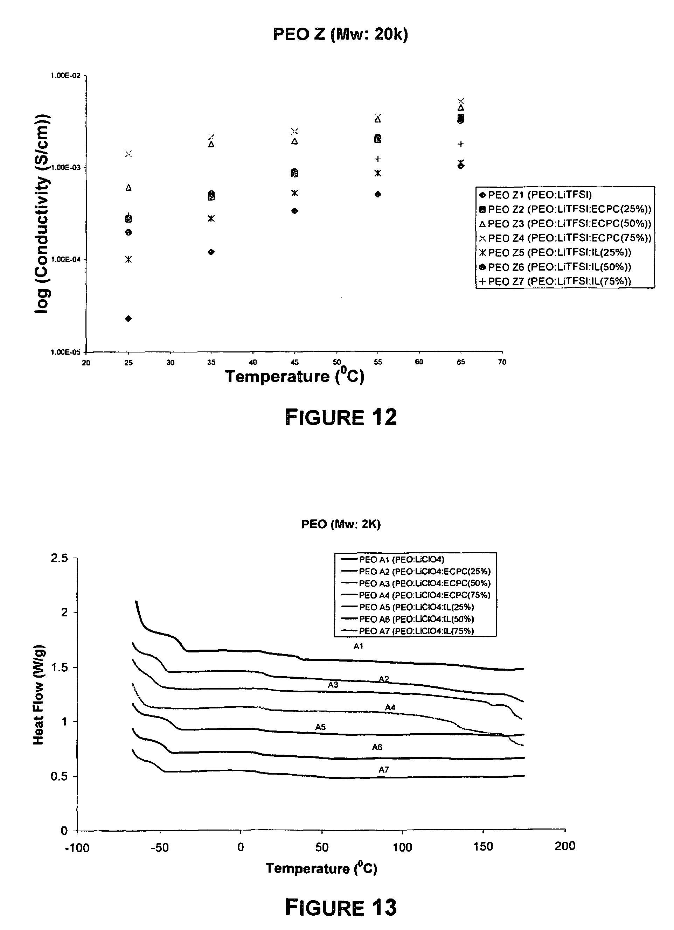

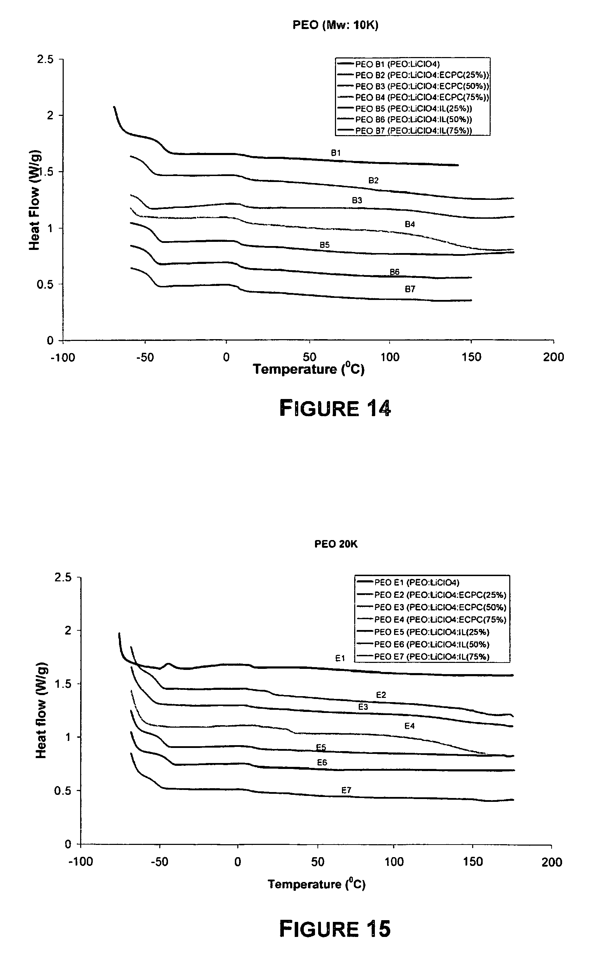

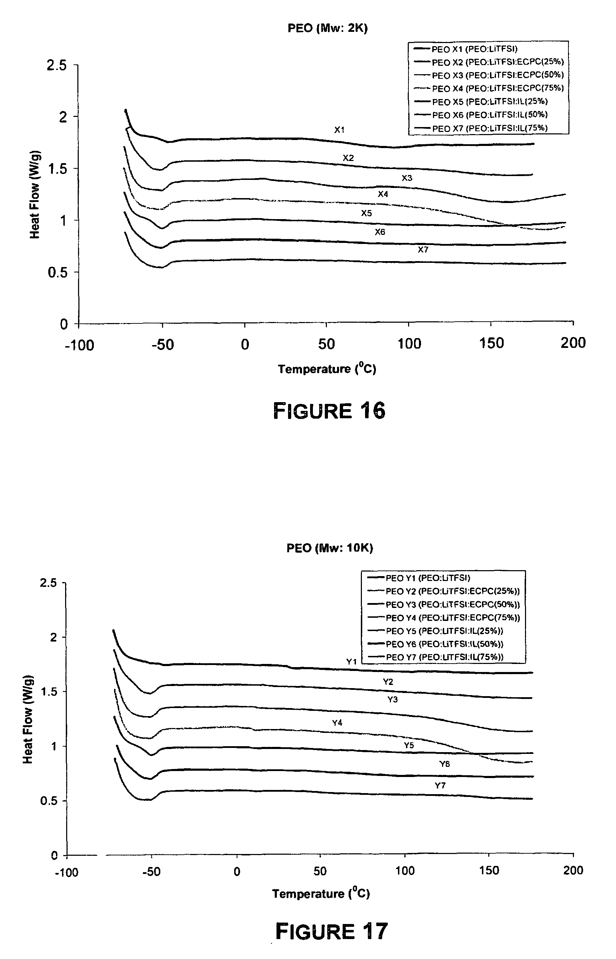

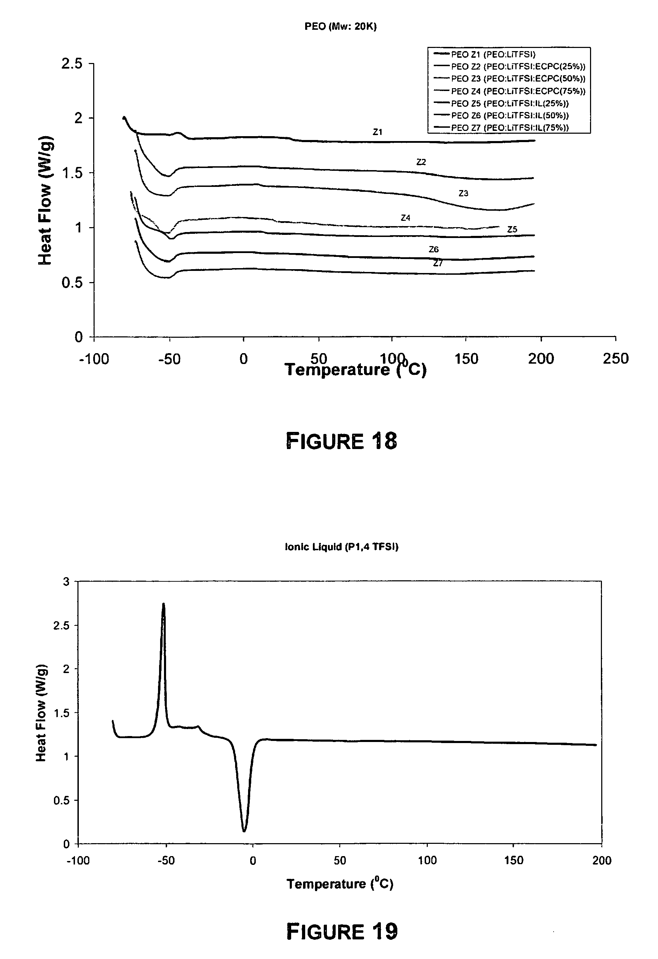

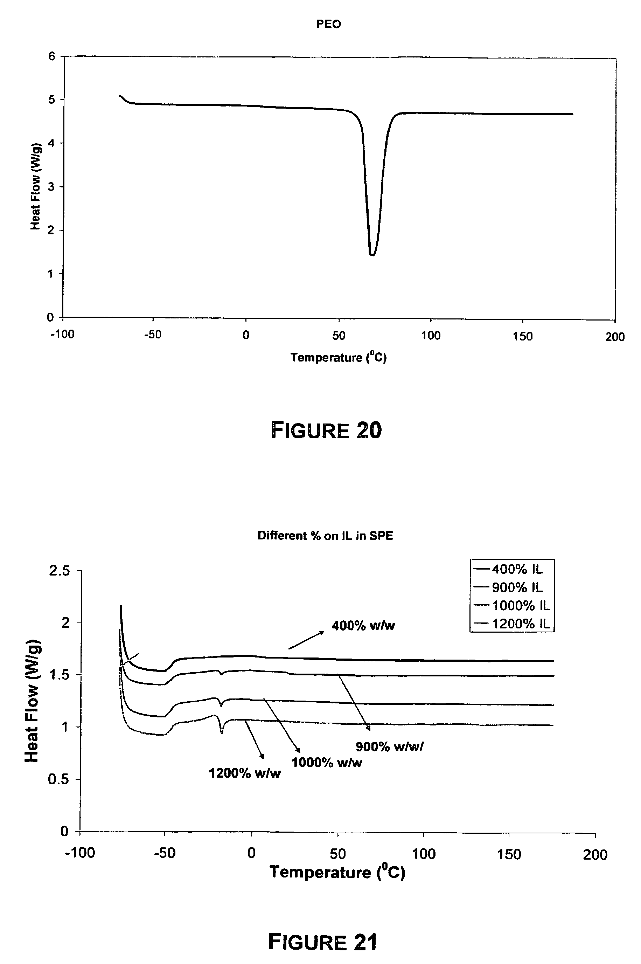

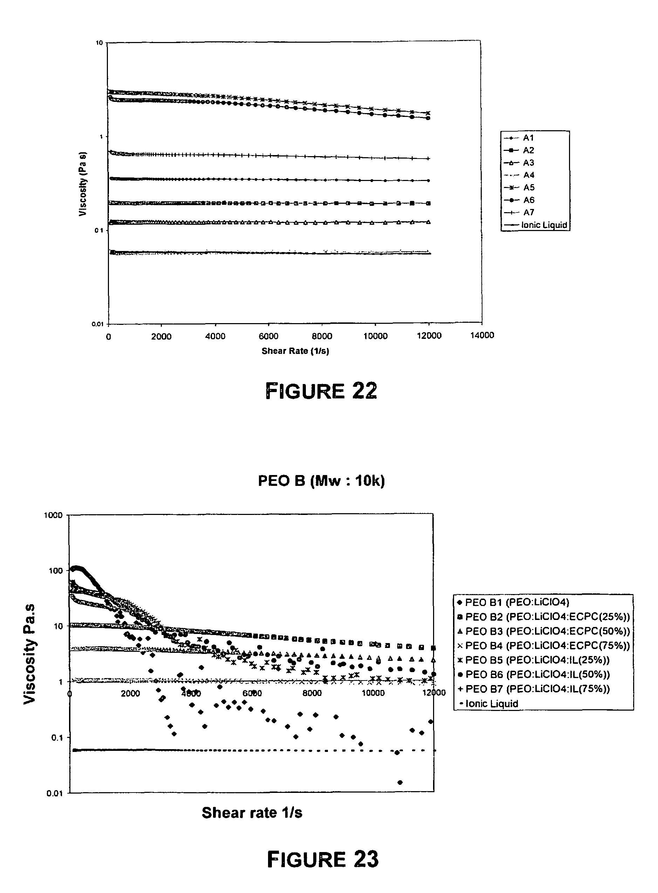

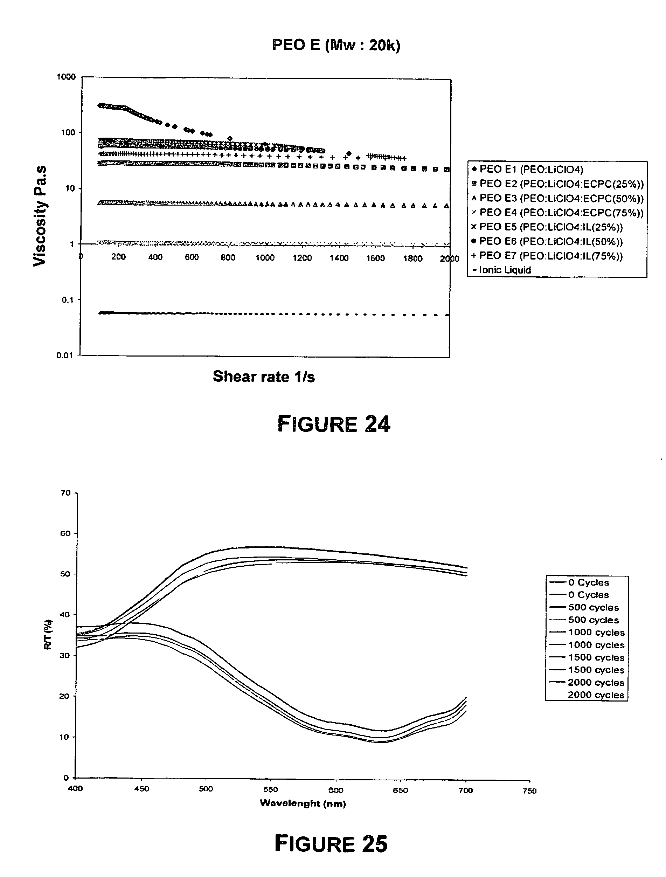

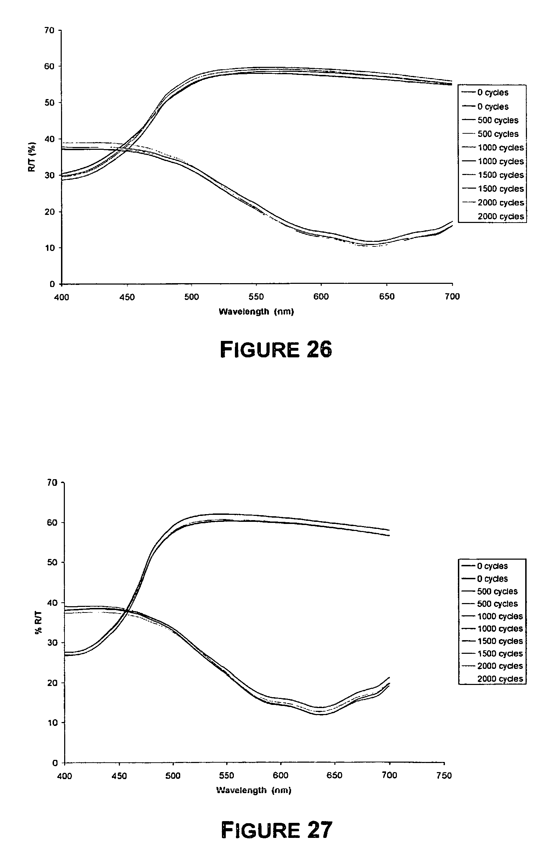

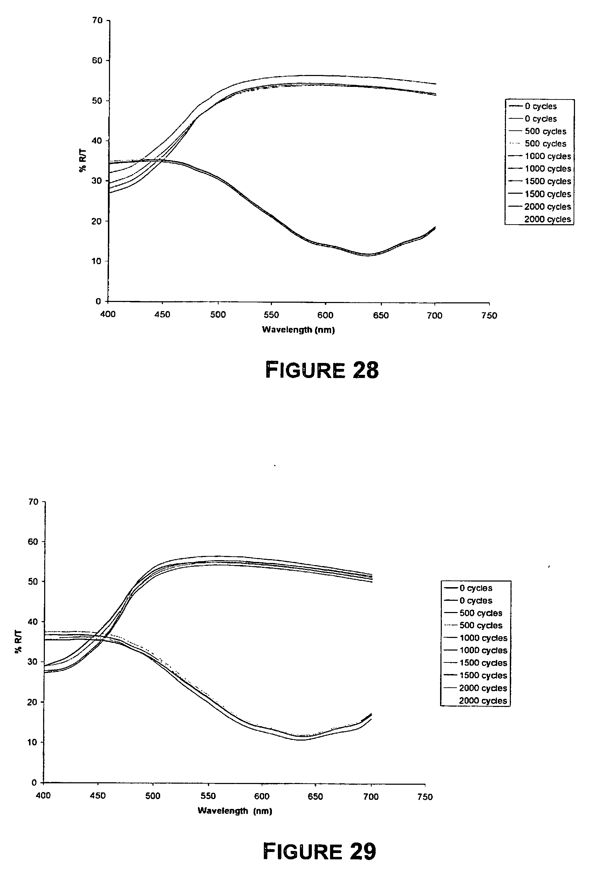

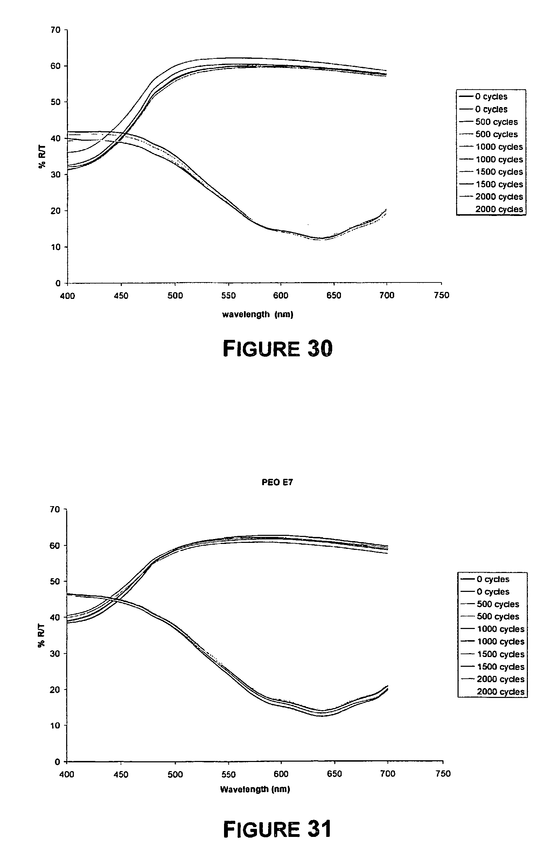

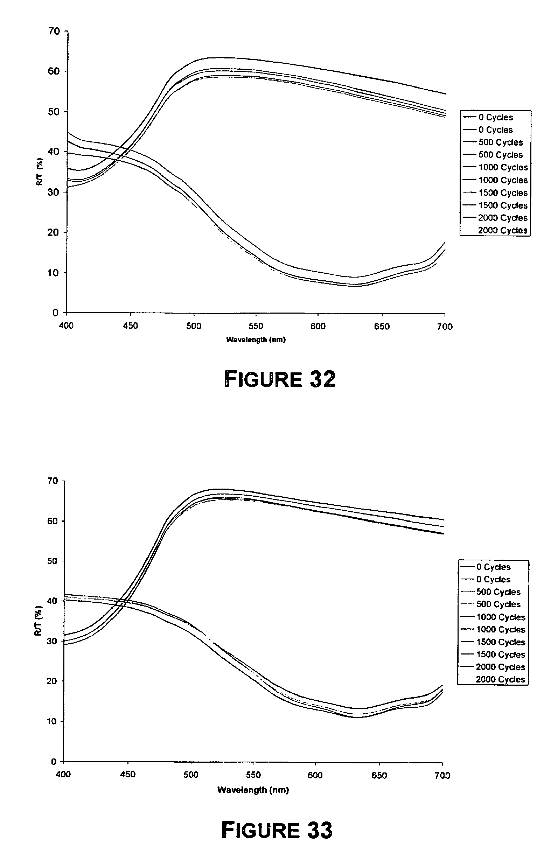

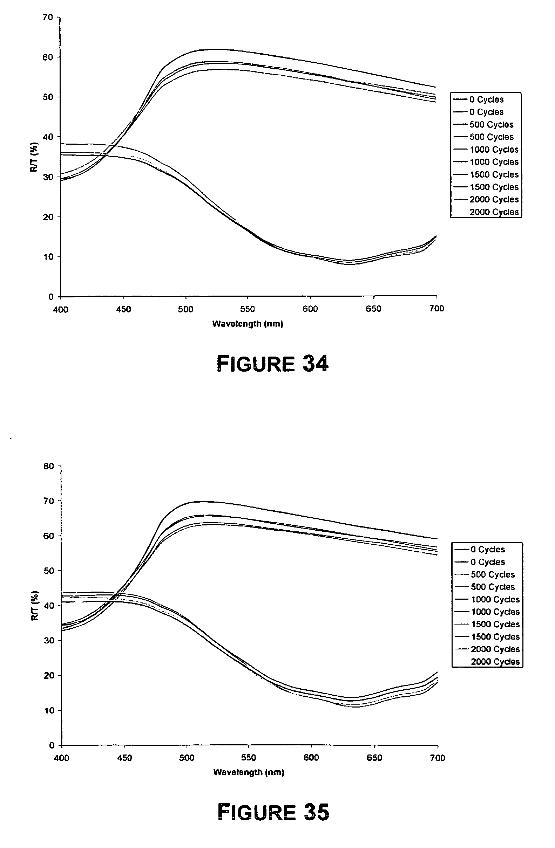

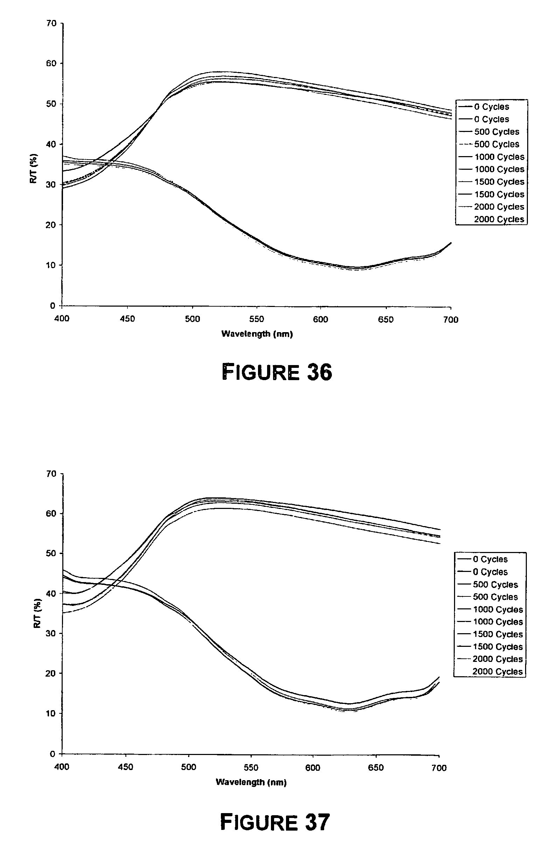

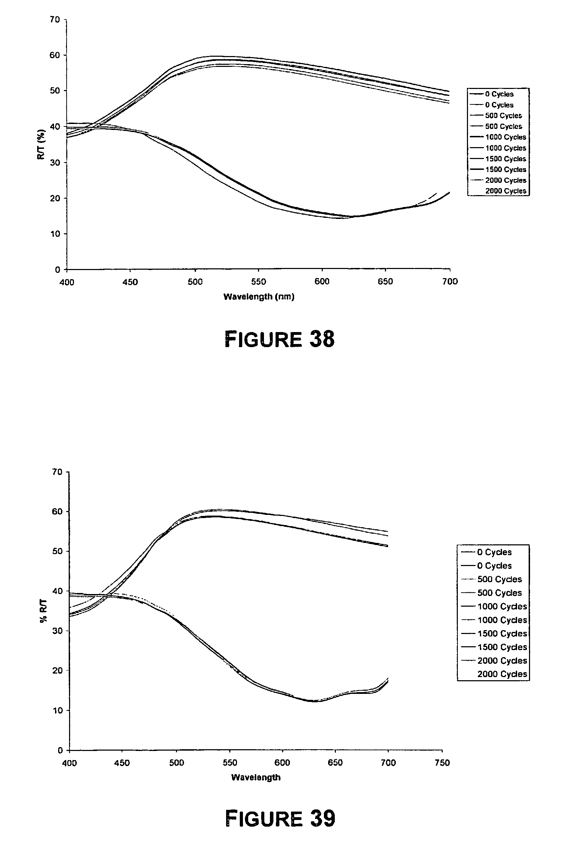

The conductivity, DSC, viscosity and spectral data are shown in the following tables or in the plots in Figures 8 to 39.

**Table 4 - Conductivity data**

| Temp Sample | 25 | 35 | 45 | 55 | 65 |
|---|---|---|---|---|---|
| **Mw: 2000** | | | | | |
| A1 | 3.76E-04 | 2.39E-05 | 8.44E-05 | 2.15E-04 | 5.22E-04 |
| A2 | 1.11E-04 | 4.17E-04 | 7.38E-04 | 1.70E-03 | 2.32E-03 |
| A3 | 3.76E-04 | 1.37E-03 | 2.41E-03 | 3.13E-03 | 5.31E-03 |
| A4 | 8.70E-04 | 1.93E-03 | 3.35E-03 | 4.92E-03 | 6.15E-03 |
| A5 | 1.55E-05 | 1.09E-04 | 2.37E-04 | 4.95E-04 | 9.14E-04 |
| A6 | 4.42E-05 | 1.79E-04 | 3.94E-04 | 9.03E-04 | 1.36E-03 |
| A7 | 8.52E-05 | 2.48E-04 | 6.95E-04 | 1.38E-03 | 1.73E-03 |
| | | | | | |

| **Mw: 20,000** | | | | | |
|---|---|---|---|---|---|
| B1 | 1.397E-06 | 1.903E-05 | 7.321E-05 | 2.106E-04 | 4.952E-04 |
| B2 | 1.107E-04 | 4.073E-04 | 6.462E-04 | 1.418E-03 | 2.321E-03 |
| B3 | 3.455E-04 | 1.042E-03 | 2.183E-03 | 2.788E-03 | 4.613E-03 |
| B4 | 6.472E-04 | 1.487E-03 | 3.380E-03 | 4.584E-03 | 5.975E-03 |
| B5 | 1.033E-05 | 8.490E-05 | 1.503E-04 | 3.755E-04 | 6.928E-04 |
| B6 | 4.109E-05 | 1.691E-04 | 3.852E-04 | 7.885E-04 | 1.003E-03 |
| B7 | 3.964E-05 | 1.698E-04 | 5.450E-04 | 1.267E-03 | 1.292E-03 |

| **Mw: 10,000** | | | | | |
|---|---|---|---|---|---|
| E1 | 1.224E-06 | 1.640E-05 | 6.348E-05 | 2.135E-04 | 4.620E-04 |
| E2 | 9.693E-05 | 3.428E-04 | 6.099E-04 | 1.342E-03 | 2.131E-03 |
| E3 | 3.245E-04 | 1.081E-03 | 1.685E-03 | 2.713E-03 | 4.000E-03 |
| E4 | 5.949E-04 | 1.258E-03 | 2.718E-03 | 4.066E-03 | 5.179E-03 |
| E5 | 1.149E-05 | 5.470E-05 | 1.728E-04 | 3.614E-04 | 5.264E-04 |
| E6 | 3.424E-05 | 1.529E-04 | 3.882E-04 | 7.892E-04 | 1.011E-03 |
| E7 | 3.862E-05 | 1.627E-04 | 4.208E-04 | 1.003E-03 | 1.234E-03 |

**Table 5 - Conductivity data**

| Temp Sample | 25 | 35 | 45 | 55 | 65 |
|---|---|---|---|---|---|
| **Mw: 2000** | | | | | |
| X1 | 3.022E-05 | 1.414E-04 | 3.305E-04 | 6.892E-04 | 1.071E-03 |
| X2 | 4.329E-04 | 8.097E-04 | 1.567E-03 | 2.694E-03 | 3.888E-03 |
| X3 | 9.576E-04 | 2.344E-03 | 2.560E-03 | 5.232E-03 | 6.446E-03 |
| X4 | 1.612E-03 | 2.983E-03 | 4.349E-03 | 5.730E-03 | 7.521E-03 |
| X5 | 1.230E-04 | 5.409E-04 | 9.563E-04 | 1.682E-03 | 2.114E-03 |
| X6 | 2.654E-04 | 6.798E-04 | 1.236E-03 | 2.507E-03 | 3.924E-03 |
| X7 | 3.963E-04 | 8.429E-04 | 1.164E-03 | 1.598E-03 | 1.873E-03 |
| | | | | | |

| **Mw: 10,000** | | | | | |
|---|---|---|---|---|---|
| Y1 | 2.46E-05 | 1.33E-04 | 3.10E-04 | 5.85E-04 | 1.06E-03 |
| Y2 | 3.03E-04 | 7.73E-04 | 1.22E-03 | 2.56E-03 | 3.80E-03 |
| Y3 | 8.47E-04 | 2.30E-03 | 2.23E-03 | 5.06E-03 | 6.77E-03 |
| Y4 | 1.45E-03 | 2.47E-03 | 3.75E-03 | 5.28E-03 | 6.76E-03 |
| Y5 | 1.22E-04 | 4.02E-04 | 8.89E-04 | 1.29E-03 | 1.43E-03 |
| Y6 | 2.15E-04 | 6.12E-04 | 1.03E-03 | 2.29E-03 | 3.42E-03 |
| Y7 | 3.66E-04 | 6.84E-04 | 1.04E-03 | 1.40E-03 | 1.72E-03 |
| | | | | | |

| **Mw: 20,000** | | | | | |
|---|---|---|---|---|---|
| Z1 | 2.32E-05 | 2.32E-05 | 3.34E-04 | 5.02E-04 | 1.03E-03 |
| Z2 | 2.74E-04 | 4.72E-04 | 8.39E-04 | 1.94E-03 | 3.42E-03 |
| Z3 | 6.12E-04 | 1.78E-03 | 1.93E-03 | 3.26E-03 | 4.43E-03 |
| Z4 | 1.41E-03 | 2.11E-03 | 2.43E-03 | 3.45E-03 | 5.13E-03 |
| Z5 | 1.00E-04 | 2.77E-04 | 5.25E-04 | 8.53E-04 | 1.11E-03 |
| Z6 | 1.98E-04 | 5.19E-04 | 8.92E-04 | 2.09E-03 | 3.15E-03 |
| Z7 | 3.00E-04 | 4.98E-04 | 8.25E-04 | 1.21 E-03 | 1.77E-03 |

**Table 6 - Cycle Stability data of (PEO:LiClO₄:Plasticiser)**

| **Electrolytes** | | | | | | |
|---|---|---|---|---|---|---|
| **Cycles** | | 0 | 500 | 1000 | 1500 | 2000 |
| E1 | 0% | 39.07 | 36.36 | 35.76 | 36.36 | 34.39 |
| E2 | 25% EC/PC | 38.28 | 39.99 | 37.81 | 39.23 | 39.67 |
| E3 | 50% EC/PC | 40.75 | 39.43 | 37.93 | 39.34 | 39.43 |
| E4 | 75% EC/PC | 37 | 36.2 | 34.5 | 33.73 | 33.024 |
| E5 | 25% organic ionic salt plasticiser | 36.16 | 35.89 | 35.15 | 34.34 | 34.87 |
| E6 | 50% organic ionic salt plasticiser | 38.86 | 39.57 | 39.27 | 40.72 | 38.4 |
| E7 | 75% organic ionic salt plasticiser | 39.37 | 37.3 | 39.71 | 38.42 | 36.78 |
| Organic ionic salt plasticiser | | 39.152 | 41.43 | 38.96 | 37.25 | 37.61 |

**Table 7- Cycle Stability data of (PEO:LiTFSI:Plasticiser)**

| **Electrolytes** | | | | | | |
|---|---|---|---|---|---|---|
| **Cycles** | | 0 | 500 | 1000 | 1500 | 2000 |
| Y1 | 0% | 42.56 | 41.85 | 41.58 | 41.14 | 40.78 |
| Y2 | 25% EC/PC | 45.83 | 44.62 | 44.94 | 42.55 | 42.11 |
| Y3 | 50% EC/PC | 45.78 | 42.86 | 39.90 | 40.79 | 40.50 |
| Y4 | 75% EC/PC | 46.32 | 43.28 | 41.79 | 41.24 | 40.45 |
| Y5 | 25% organic ionic salt plasticiser | 38.53 | 40.95 | 39.67 | 38.90 | 37.79 |
| Y6 | 50% organic ionic salt plasticiser | 43.56 | 43.55 | 43.23 | 41.24 | 41.94 |
| Y7 | 75% organic ionic salt plasticiser | 37.63 | 36.38 | 35.84 | 35.09 | 34.74 |

Those skilled in the art will appreciate that the invention described herein is susceptible to variations and modifications other than those specifically described. It is to be understood that the invention includes all such variations and modifications. The invention also includes all of the steps, features, compositions and compounds referred to, or indicated in this specification, individually or collectively, and any and all combinations of any two or more of the steps or features.

## Claims

1. A polymer electrolyte suitable for use in an electrochemical cell, the polymer electrolyte including:
- a polymer substrate, wherein the polymer substrate is a polyalkylene oxide or copolymer thereof;
- an organic ionic salt plasticiser, wherein the organic ionic salt plasticiser is selected from the group consisting of: N,N-dimethylpyrrolidinium bis(trifluoromethanesulfonyl) imide (P₁₁TFSI), N-ethyl-N-methyl-pyrrolidinium bis(trifluoromethanesulfonyl) imide (P₁₂TFSI), and N-butyl-N-methyl-pyrrolidinium bis(trifluoromethanesulfonyl) imide (P₁₄TFSI); and
- an inorganic electrolyte salt, wherein the inorganic electrolyte salt is LiN(CF₃SO₂)₂,
wherein the molar ratio of the polymer substrate and the inorganic electrolyte salt is equal or more than 8:1.

2. A polymer electrolyte according to claim 1, wherein the polyalkylene oxide is polyethylene oxide.

3. A polymer electrolyte according to claim 1 or 2, wherein the polyethylene oxide has a molecular weight of 2,000 Da, 10,000 Da, or 20,000 Da.

4. A polymer electrolyte according to any one of the preceding claims, wherein the amount of organic ionic salt plasticiser added to a composition containing the polymer substrate and the inorganic electrolyte salt is 25% w/w.

5. An electrochemical cell including:
- a working electrode;
- a counter electrode;
- a polymer electrolyte according to any one of claims 1 to 4 in contact with both the working electrode and the counter electrode; and
- means for electrically connecting the working electrode and the counter electrode.

6. An electrochemical cell according to claim 5, further including a power supply for applying a voltage between the working electrode and the counter electrode.

7. An electrochemical cell according to claim 6, wherein the working electrode and the counter electrode are conjugated polymer electrodes.

8. An electrochromic device including an electrochemical cell according to any one of claims 5 to 7.

9. An electrochemical device according to claim 8, wherein the electrochromic device is an electrochromic mirror.

## Patentansprüche

1. Polymerelektrolyt, geeignet zur Verwendung in einer elektrochemischen Zelle, wobei der Polymerelektrolyt einschließt:
- ein Polymersubstrat, wobei das Polymersubstrat ein Polyalkylenoxid oder Copolymer davon ist;
- einen Weichmacher in Form eines organischen ionischen Salzes, wobei der Weichmacher in Form eines organischen ionischen Salzes ausgewählt ist aus der Gruppe bestehend aus: N,N-Dimethylpyrrolidinium-bis(trifluormethansulfonyl)imid (P₁₁TFSI), N-Ethyl-N-methyl-pyrrolidinium-bis(trifluormethansulfonyl)imid (P₁₂TFSI) und N-Butyl-N-methyl-pyrrolidinium-bis(trifluormethansulfonyl)imid (P₁₄TFSI), sowie
- ein anorganisches Elektrolytsalz, wobei das anorganische Elektrolytsalz LiN(CF₃SO₂)₂ ist, wobei das Molverhältnis des Polymersubstrats und des anorganischen Elektrolytsalzes gleich oder größer als 8:1 ist.

2. Polymerelektrolyt nach Anspruch 1, wobei das Polyalkylenoxid Polyethylenoxid ist.

3. Polymerelektrolyt nach Anspruch 1 oder 2, wobei das Polyethylenoxid ein Molekulargewicht von 2.000 Da, 10.000 Da oder 20.000 Da aufweist.

4. Polymerelektrolyt nach einem der vorangehenden Ansprüche, wobei die Menge an Weichmacher in Form eines organischen ionischen Salzes, der zu einer Zusammensetzung hinzugegeben ist, die das Polymersubstrat und das anorganische Elektrolytsalz enthält, 25 Gew.-% beträgt.

5. Elektrochemische Zelle, einschließend:
- eine Arbeitselektrode;
- eine Gegenelektrode;
- einen Polymerelektrolyt nach einem der Ansprüche 1 bis 4 in Kontakt mit sowohl der Arbeitselektrode als auch der Gegenelektrode; sowie
- Mittel zum elektrischen Verbinden der Arbeitselektrode und der Gegenelektrode.

6. Elektrochemische Zelle nach Anspruch 5, weiterhin einschließend eine Stromversorgung zum Anlegen einer Spannung zwischen der Arbeitselektrode und der Gegenelektrode.

7. Elektrochemische Zelle nach Anspruch 6, wobei die Arbeitselektrode und die Gegenelektrode Elektroden aus konjugierten Polymeren sind.

8. Elektrochrome Vorrichtung, einschließend eine elektrochemische Zelle nach einem der Ansprüche 5 bis 7.

9. Elektrochemische Vorrichtung nach Anspruch 8, wobei die elektrochrome Vorrichtung ein elektrochromer Spiegel ist.

## Revendications

1. Électrolyte de polymère adapté pour être utilisé dans une pile électrochimique, l'électrolyte de polymère comprenant :
- un substrat de polymère, dans lequel le substrat de polymère est un oxyde de polyalkylène ou un copolymère de celui-ci ;
- un plastifiant de sel ionique organique, dans lequel le plastifiant de sel ionique organique est sélectionné parmi le groupe constitué de : N,N-diméthylpyrrolidinium bis(trifluorométhanesulfonyl) imide (P11TFSI), N-éthyl-N-méthyl-pyrrolidinium bis(trifluorométhanesulfonyl) imide (P12TFSI), et N-butyl-N-méthyl-pyrrolidinium bis(trifluorométhanesulfonyl) imide (P14TFSI) ; et
- un sel d'électrolyte inorganique, dans lequel le sel d'électrolyte inorganique est LiN(CF₃SO₂)₂,
dans lequel le rapport molaire du substrat de polymère et du sel d'électrolyte inorganique est égal ou supérieur à 8:1.

2. Électrolyte de polymère selon la revendication 1, dans lequel l'oxyde de polyalkylène est un oxyde de polyéthylène.

3. Électrolyte de polymère selon les revendications 1 ou 2, dans lequel l'oxyde de polyéthylène a un poids moléculaire de 2000 Da, 10000 Da, ou 20000 Da.

4. Électrolyte de polymère selon l'une quelconque des revendications précédentes, dans lequel la quantité de plastifiant de sel ionique organique est ajoutée à une composition contenant le substrat de polymère et le sel d'électrolyte inorganique est de 25 % poids/poids.

5. Pile électrochimique comprenant :
- une électrode active ;
- une contre électrode ;
- un électrolyte de polymère selon l'une quelconque des revendications 1 à 4 en contact avec à la fois l'électrode active et la contre électrode ; et
- des moyens pour connecter électriquement l'électrode active et la contre électrode.

6. Pile électrochimique selon la revendication 5, comprenant de plus une alimentation électrique pour appliquer une tension entre l'électrode active et la contre électrode.

7. Pile électrochimique selon la revendication 6, dans laquelle l'électrode active et la contre électrode sont des électrodes de polymère conjuguées.

8. Dispositif électro chromique comprenant une pile électrochimique selon l'une quelconque des revendications 5 à 7.

9. Dispositif électrochimique selon la revendication 8, dans lequel le dispositif électro chromique est un miroir électro chromique.
